# EUROPÄISCHE PATENTSCHRIFT

(11) **EP 3 857 474 B1**
(45) Veröffentlichungstag und Bekanntmachung des Hinweises auf die Patenterteilung: **10.09.2025**
(21) Anmeldenummer: 19778448.1
(22) Anmeldetag: 19.09.2019
(51) Int. Cl.: G06Q 10/04

(54) **VORRICHTUNG, VERFAHREN UND COMPUTERPROGRAMM ZUM BETRIEB EINES SCHIFFES**
DEVICE, METHOD AND COMPUTER PROGRAM FOR OPERATING A SHIP
DISPOSITIF, PROCÉDÉ ET PROGRAMME INFORMATIQUE POUR FAIRE FONCTIONNER UN NAVIRE

(30) Priorität: 26.09.2018 DE 102018216514
(43) Veröffentlichungstag der Anmeldung: 04.08.2021
(73) Patentinhaber: Fraunhofer-Gesellschaft zur Förderung der angewandten Forschung e.V., 80686 München (DE)
(72) Erfinder: RIZVANOLLI, Anisa, 21073 Hamburg (DE); JOHN, Ole, 21073 Hamburg (DE)
(74) Vertreter: Zimmermann, Tankred Klaus
(86) Internationale Anmeldenummer: PCT/EP2019/075230
(87) Internationale Veröffentlichungsnummer: WO 2020/064513

(56) Entgegenhaltungen:
- EP-A2- 2 878 528
- DE-A1- 102004 031 933
- MAK LAWRENCE ET AL: "Ship performance monitoring and analysis to improve fuel efficiency", 2014 OCEANS - ST. JOHN'S, IEEE, 14 September 2014 (2014-09-14), pages 1 - 10, XP032716680, DOI: 10.1109/OCEANS.2014.7003300

## Beschreibung

### Technisches Gebiet

Ausführungsbeispiele gemäß der Erfindung beziehen sich auf eine Vorrichtung, ein Verfahren und ein Computerprogramm zum Betrieb eines Schiffes.

### Hintergrund der Erfindung

Für einen sicheren und störungsfreien Betrieb eines Schiffes erfolgt heutzutage eine Ermittlung reisespezifischer und sicherheitsspezifischer Informationen pro Schiff und Route manuell. Trotz der Abhängigkeit von vielen Faktoren basiert diese Entscheidung vorrangig auf Erfahrungswerten und einer nicht klar quantifizierbaren Einschätzung verantwortlicher Planer. Insbesondere basiert die Ermittlung der Informationen auf einer vordefinierten Route der Schiffe, so dass für diese ein zuverlässiger Betrieb des Schiffes sichergestellt ist. Änderungen des Betriebszustandes des Schiffes können nicht miteinbezogen werden. Dokument DE102004031933 offenbart ein rechnergestütztes Planungsverfahren für einen Reiseplan. EP2878528 offenbart ein Verfahren zum motorbetriebenen Anlegen. XP03276680 offenbart ein Verfahren zur Überwachung und Analyse von Schiffsleistungen um die Verwendung von Treibstoff zu optimieren.

In Anbetracht dessen besteht ein Bedarf nach einem Konzept, das einen besseren Kompromiss zwischen einem optimierten, effizienten und sicheren Betrieb eines Schiffes, Kostenreduktion, einer Beachtung schifffahrtspezifischer Regularien und einer erleichterten Überprüfung einer Einhaltung der schifffahrtspezifischen Regularien ermöglicht.

Diese Aufgabe wird durch die unabhängigen Patentansprüche mit dem Verfahrensanspruch 1, dem Computerprogramm-Anspruch 11 und dem Vorrichtungsanspruch 12 gelöst.

Erfindungsgemäße Weiterbildungen sind in den Unteransprüchen definiert.

### Zusammenfassung der Erfindung

Ein Ausführungsbeispiel betrifft ein Verfahren zum Betrieb eines Schiffes mit dem Schritt Erhalten eines Schiffsreiseplans mittels einer Verarbeitungseinrichtung des Schiffes. Dabei kann der Schiffsreiseplans zum Beispiel von einer Landstation an die Verarbeitungseinrichtung des Schiffes übertragen werden. Alternativ kann der Schiffsreiseplan z. B. per USB-Stick, per App und/oder per Eingabe über eine Benutzeroberfläche einer Vorrichtung auf dem Schiff, die z. B. das Verfahren ausführt, an die Verarbeitungseinrichtung des Schiffes übertragen werden. Der Schiffsreiseplan kann für einen oder mehrere Abschnitte einer Reise des Schiffes einen oder mehrere definierte Schiffbetriebszustände aufweisen. Die Reise des Schiffes kann beispielsweise in die Abschnitte Seefahrt und Hafenliegezeit aufgeteilt werden. Der eine oder die mehreren Abschnitte der Reise des Schiffes können aber auch regelmäßige Zeitabschnitte von z. B. fünf Minuten, 30 Minuten, eine Stunde oder einen Tag definieren und dabei zeitlich z. B. die komplette Reise des Schiffes abbilden. Es ist aber auch möglich, dass der Schiffsreiseplan nur einen Abschnitt aufweist, der z. B die komplette Reise des Schiffes umfassen kann. Während dieses einen Abschnitts oder der mehreren Abschnitte der Reise kann der Schiffsreiseplan einen oder mehrere definierte Schiffsbetriebszustände aufweisen, die zeitlich z. B. die komplette Reise des Schiffes abbilden oder in regelmäßigen oder unregelmäßigen Zeitabständen einen Betriebszustand des Schiffes während der Reise definieren. Während der Reise kann ein aktueller Schiffsbetriebszustand des Schiffes erfasst werden und zeitlich einem der definierten Schiffsbetriebszuständen des Schiffsreiseplans zugeordnet werden.

So kann der aktuelle Schiffsbetriebszustand z. B. zu einem Zeitpunkt der Reise erfasst werden und einem definierten Schiffsbetriebszustand des Schiffsreiseplans zu dem gleichen Zeitpunkt zugeordnet werden. Optional ist es möglich, dass der aktuelle Schiffsbetriebszustand den Schiffsbetriebszustand des Schiffes zu einem Zeitpunkt des Erfassens und darauffolgende Zeitpunkte aufweist. Es ist somit möglich, dass der aktuelle Schiffsbetriebszustand den Schiffsbetriebszustand des Schiffes für Zeitdauern innerhalb eines Abschnitts oder für mehrere Abschnitte der Reise des Schiffes definieren kann, wodurch ermöglicht wird, dass der aktuelle Schiffsbetriebszustand einem oder mehreren der definierten Schiffsbetriebszustände des Schiffsreiseplans zugeordnet werden kann, die den Schiffsbetriebszustand während der gleichen Zeitspanne wie der aktuelle Schiffsbetriebszustand definieren können. In anderen Worten wird somit z. B. ermöglicht, dass nur bestimmte Zeitpunkte oder Abschnitte einer vordefinierten Reise mit einer aktuellen Reise abgeglichen werden, wodurch Abweichungen sehr effektiv mit geringer Rechenleistung mittels des Verfahrens ermittelt werden können.

Gemäß einem Ausführungsbeispiel bildet sowohl der eine oder die mehreren definierten Schiffbetriebszustände als auch der aktuelle Schiffsbetriebszustand die Reise des Schiffes (Realität) vollständig ab, wodurch z. B. der aktuelle Schiffsbetriebszustand zeitlich allen definierten Schiffbetriebszuständen zugeordnet werden kann. Dies ermöglicht die definierten Schiffbetriebszustände mit dem aktuellen Schiffsbetriebszustand effektiv für die komplette Reise des Schiffes zu verknüpfen, wodurch aktuelle Abweichungen in der Reise schnell erfasst werden können und somit eine neue Planung der Reise des Schiffes vereinfacht wird.

Das Verfahren zum Betrieb des Schiffes kann den aktuellen Schiffsbetriebszustand mit dem zeitlich zugeordneten definierten Schiffsbetriebszustand des Schiffsreiseplans abgleichen, um ansprechend auf Abweichungen des aktuellen Schiffsbetriebszustandes von dem definierten Schiffsbetriebszustand einen aktualisierten Schiffsreiseplan zu berechnen. Die Berechnung des aktualisierten Schiffsreiseplans basiert z. B. auf einem Modell, das betriebsrelevante Parameter für den Betrieb des Schiffes berücksichtigt.

Die vorliegende Erfindung basiert auf der Erkenntnis, dass durch Berechnung eines aktualisierten Schiffsreiseplans basierend auf Abweichungen des aktuellen Schiffsbetriebszustandes von dem zeitlich zugeordneten definierten Schiffsbetriebszustand es ermöglicht wird, dass kurzfristige Ereignisse, die den Betrieb des Schiffes stören könnten, durch das Verfahren berücksichtigt werden können, so dass der aktualisierte Schiffsreiseplan einen reibungslosen, effizienten und sicheren Betrieb des Schiffes gewährleisten kann. Das Modell, auf dem die Berechnung des aktualisierten Schiffsreiseplans basiert, kann ermöglichen, die Abweichung des aktuellen Schiffsbetriebszustandes von dem zeitlich zugeordneten definierten Schiffsbetriebszustand des Schiffsreiseplans so in den aktualisierten Schiffsreiseplan zu integrieren, dass der Betrieb des Schiffes aufrechterhalten werden kann und es somit zu möglichst wenigen bis zu keinen Verzögerungen bzw. Ausfällen in dem Betrieb des Schiffes kommt. Dabei kann das Modell durch eine Berücksichtigung der betriebsrelevanten Parameter schifffahrtspezifische Regularien beachten und den aktualisierten Schiffsreiseplan bereitstellen, der die schifffahrtspezifischen Regularien einhält bzw. optional anzeigt, wenn schifffahrtspezifische Regularien nicht eingehalten worden sind. Hierbei ist das Modell beispielsweise ausgelegt, um den aktualisierten Schiffsreiseplan dahin gehend zu optimieren, dass der Betrieb des Schiffes effizient und sicher aufrechterhalten wird, wenn die Abweichungen auftreten. Dabei kann das Modell z. B. ausgelegt sein, um zumindest teilweise, sofern möglich, Abweichungen zuzulassen, die innerhalb von geduldeten Abweichungen schifffahrtspezifischer Regularien liegen, um den Betrieb des Schiffes aufrechtzuerhalten und beispielsweise Verzögerungen in dem Betrieb des Schiffes zu vermeiden. Die schifffahrtsspezifischen Regularien weisen z. B. Rahmenbedingungen auf, innerhalb derer Abweichungen von Regelungen bei Ausnahmesituationen ermöglicht werden.

Somit ist festzuhalten, dass das Verfahren zum Betrieb des Schiffes einen optimierten, effizienten und sicheren Betrieb des Schiffes unter Beachtung schifffahrtspezifischer Regularien und Ermöglichung einer erleichterten Überprüfung einer Einhaltung der schifffahrtspezifischen Regularien durch Anpassung des Schiffsreiseplans während der Reise des Schiffes aufgrund von Abweichungen in der Route ermöglicht. Ferner kann das Verfahren zum Betrieb des Schiffes Kosten senken, da das Modell zur Berechnung des aktualisierten Schiffsreiseplans z. B. mittels der betriebsrelevanten Parameter schifffahrtspezifische Regularien beachten kann und dadurch Bußgelder bei Nicht-Einhaltung der schifffahrtspezifischen Regularien vermeiden kann.

Gemäß einem Ausführungsbeispiel weist der Schiffsreiseplan und/oder der aktualisierte Schiffsreiseplan einen Aufgabenzeitplan für eine Crew des Schiffes für die Reise auf. Der Schiffsreiseplan und der aktualisierte Schiffsreiseplan können somit für jeden der Abschnitte der Reise in dem Aufgabenzeitplan Aufgaben, Tätigkeiten und Ruhepausen der Crew ermitteln und dokumentieren, um einen reibungslosen Betrieb des Schiffes zu gewährleisten.

Gemäß einem Ausführungsbeispiel können die betriebsrelevanten Parameter des Modells Wartungszeiten, Seefahrtszeiten, Hafenliegezeiten und/oder sicherheitsrelevante Parameter, wie Crewruhezeiten, aufweisen. Die Seefahrtszeiten und Hafenliegezeiten ermöglichen, dass das Schiff gemäß dem aktualisierten Schiffsreiseplan z. B. rechtzeitig an einem Hafen andockt bzw. Aufgaben während der Seefahrtszeiten und Hafenliegezeiten durch das Modell so geplant werden, dass es zu keinen oder nur geringen Verzögerungen in dem Betrieb des Schiffes kommt. So kann das Verfahren beispielsweise auch Wartungszeiten in dem Modell berücksichtigen, wodurch der aktualisierte Schiffsreiseplan beispielsweise in dem Aufgabenzeitplan für die Crew des Schiffes angibt, wann und wer optimalerweise an von dem aktualisierten Schiffsreiseplan angezeigten Maschinen des Schiffes Wartungsarbeiten durchführen soll, damit das Schiff sicher und mit einer Reduzierung von betrieblichen Störungen die Reise fahren kann. Ferner kann das Modell sicherheitsrelevante Parameter, wie z. B. Crewruhezeiten, aufweisen, die durch schifffahrtspezifische Regularien definiert sind und eingehalten werden sollten, um den sicheren Betrieb des Schiffes zu gewährleisten, da bei Nicht-Beachtung der Crewruhezeiten beispielsweise Übermüdung der Crew auftreten kann und somit der Betrieb des Schiffes nur noch eingeschränkt möglich ist und schifffahrtspezifische Regularien nicht eingehalten werden, wodurch Kosten für den Betrieb des Schiffes steigen können und gegebenenfalls Unfälle eintreten.

Gemäß einem Ausführungsbeispiel ist das Modell ausgelegt, um in einem Ausnahmezustand Abweichungen von dem sicherheitsrelevanten Parameter Crewruhezeiten zuzulassen, um den Betrieb des Schiffes aufrechtzuerhalten. In anderen Worten kann das Modell z. B. ausgelegt sein, um den sicherheitsrelevanten Parameter Crewruhezeiten in einem Ausnahmezustand zu verletzen, um den Betrieb des Schiffes aufrechtzuerhalten. Ein Ausnahmezustand kann z. B. die Abweichung des aktuellen Schiffsbetriebszustandes von dem zeitlich zugeordneten definierten Schiffsbetriebszustand des Schiffsreiseplans sein, z. B. aufgrund einer Beschädigung der Maschine/des Schiffes oder aufgrund einer verspäteten Hafenankunft. So hat das Modell die Priorität den Betrieb des Schiffes aufrechtzuerhalten und beispielsweise bei einer Beschädigung von Maschine/ Schiff auch Crewmitgliedern, die zu diesem Zeitpunkt die Crewruhezeit gemäß den schifffahrtspezifischen Regularien benötigen, Aufgaben zur Beseitigung der Beschädigungen zuzuteilen, damit das Schiff mit nur geringen oder keinen Einschränkungen den Betrieb fortsetzen kann. Genauso kann das Modell beispielsweise bei einer verspäteten Hafenankunft eine Ausnahmesituation feststellen, und somit für Crewmitglieder, die gemäß den schifffahrtspezifischen Regularien eine bestimmte Crewruhezeit benötigen, abweichende Crewruhezeiten berechnen, die innerhalb, gemäß den Regularien, geduldeter Abweichungen liegen. Dadurch kann das Modell Aufgaben in dem Aufgabenzeitplan diesen Crewmitgliedern zuweisen, damit eine verkürzte Hafenliegezeit bei Erledigung aller nötigen Aufgaben eingehalten werden kann und somit der Betrieb des Schiffes nicht oder nur kaum aufgehalten wird. Dadurch ist das Verfahren für den Betrieb des Schiffes optimiert und sehr effizient gestaltet.

Gemäß einem Ausführungsbeispiel kann zumindest einer der betriebsrelevanten Parameter, basierend auf einer Abweichung des aktuellen Schiffsbetriebszustandes von dem zeitlich zugeordneten definierten Schiffsbetriebszustand des Schiffsreiseplans, angepasst werden. So können die Abweichungen beispielsweise anzeigen, dass sich die Seefahrtszeiten oder die Hafenliegezeiten geändert haben und somit angepasst werden müssen bzw. Ereignisse eingetreten sind, wodurch die Wartungszeiten und/oder Crewruhezeiten angepasst werden sollten, damit die Abweichungen den Betrieb des Schiffes nicht stören und somit ein optimierter, effizienter und sicherer Betrieb des Schiffes gewährleistet werden kann. Durch die Anpassung der betriebsrelevanten Parameter, basierend auf den Abweichungen, kann das Modell die Abweichungen berücksichtigen und somit einen aktualisierten Schiffsreiseplan berechnen, der den Betrieb des Schiffes trotz der Abweichungen gewährleistet.

Gemäß einem Ausführungsbeispiel kann das Modell berücksichtigen, ob Aufgaben des Aufgabenzeitplans für die Crew zeitlich aufgeteilt und/oder auf mehrere Crewmitglieder aufgeteilt werden können. Dadurch kann das Modell beispielsweise, wenn die Abweichungen anzeigen, dass dringende Aufgaben jetzt erledigt werden müssen und beispielsweise nicht auf einen späteren Zeitpunkt verschoben werden können, andere zeitgleiche Aufgaben, gemäß dem Aufgabenzeitplan des Schiffsreiseplans, zeitlich an einen anderen Zeitpunkt verschieben oder auf andere Crewmitglieder aufteilen. Somit können durch die Abweichungen hervorgerufene Tätigkeiten durchgeführt werden, ohne oder mir nur geringen Einschränkungen des Betriebs des Schiffes. Das Verfahren kann somit basierend auf dem Modell mit dem aktualisierten Schiffsreiseplan Aufgaben und Tätigkeiten Crewmitgliedern zuordnen und bestimmen, wann diese durchgeführt werden sollen. Dadurch kann ein optimierter, effizienter und sicherer Betrieb des Schiffes gewährleistet werden.

Gemäß einem Ausführungsbeispiel kann die Berechnung des aktualisierten Schiffsreiseplans, basierend auf dem Modell, in einer Zeit kürzer als fünf Minuten nach Feststellung der Abweichungen des aktuellen Schiffsbetriebszustandes von dem zeitlich zugeordneten definierten Schiffsbetriebszustand des Schiffsreiseplans erfolgen. Gemäß einem Ausführungsbeispiel kann die Zeit auch kürzer als eine Minute, 30 Sekunden oder eine Sekunde sein, wodurch der Schiffsreiseplan z. B. dynamisch in Echtzeit zu dem aktualisierten Schiffsreiseplan angepasst werden kann. Das Verfahren kann somit eine sehr schnelle Reaktion auf Abweichungen des aktuellen Schiffsbetriebszustandes von dem zeitlich zugeordneten definierten Schiffsbetriebszustand des Schiffsreiseplans reagieren und somit zu jedem Zeitpunkt der Reise des Schiffes einen effizienten und sicheren Betrieb des Schiffes gewährleisten.

Gemäß einem Ausführungsbeispiel kann der aktuelle Schiffsbetriebszustand mittels einer Schnittstelle der Verarbeitungseinrichtung zu einer elektronischen Seekarte, zu Maschinensensoren, zu Arbeitszeitterminals der Crew und/oder zu der Landstation erfasst werden. Aufgrund des Zugriffs der Verarbeitungseinrichtung auf die elektronische Seekarte kann der aktuelle Schiffsbetriebszustand z. B. eine Position des Schiffes, eine Route des Schiffes, Wetter, Krieg, Seenot, Umweltzonen, Piraterie etc. für die Reise des Schiffes aufweisen. Durch die Schnittstelle zu den Maschinensensoren kann der aktuelle Schiffsbetriebszustand anzeigen, ob eine Maschine des Schiffes gewartet werden sollte, beschädigt ist, ausgefallen ist oder einwandfrei arbeitet. Durch die Arbeitszeitterminals der Crew kann die Verarbeitungseinrichtung automatisch registrieren, welche Arbeiten welches Crewmitglieds zu welchem Zeitpunkt durchführt. Durch die Schnittstelle zu der Landstation können für den Betrieb des Schiffes relevante Informationen, wie z. B. eine Verspätung eines Lotsen, eine Änderung der Route des Schiffes oder anderweitige Anforderungen der Landstationen an den Betrieb des Schiffes, übertragen werden. Somit kann das Verfahren über die Schnittstellen automatisch den aktuellen Schiffsbetriebszustand erfassen und basierend darauf den aktuellen Schiffsbetriebszustand mit dem zeitlich zugeordneten definierten Schiffsbetriebszustand des Schiffsreiseplans abgleichen, um zu überprüfen, ob der aktuelle Schiffsbetriebszustand von dem definierten Schiffsbetriebszustand Abweichungen aufweist. Somit kann das Verfahren durch die Schnittstellen der Verarbeitungseinrichtung vielfältige Ereignisse, die auf den Betrieb des Schiffes einen Einfluss haben können, abfragen und/oder überprüfen und in eine Berechnung des aktualisierten Schiffsreiseplans miteinbeziehen.

Gemäß einem Ausführungsbeispiel kann der aktuelle Schiffsbetriebszustand aktuelle, gegebenenfalls z. B. zeitgleiche, und/oder zukünftige Arbeitszeiten und/oder Aufgaben der Crew, aktuelle Zustände von Maschinen, aktuelle und/oder zukünftige Positionen des Schiffes und/oder externe Einflüsse aufweisen. So kann beispielsweise die Verarbeitungseinrichtung durch die Schnittstelle zu den Arbeitsterminals der Crew aktuelle und vergangene Arbeitszeiten und durch Crewmitglieder erledigte Aufgaben erfassen und basierend auf diesen Informationen aktuelle und zukünftige Arbeitszeiten und Aufgaben der Crew ermitteln, die die Verarbeitungseinrichtung in Form des aktuellen Schiffsbetriebszustandes bereitstellen kann. Des Weiteren kann der aktuelle Schiffsbetriebszustand den aktuellen Zustand der Maschinen des Schiffes aufweisen. Der aktuelle Schiffsbetriebszustand kann die Reise des Schiffes mit der aktuellen und den zukünftigen Positionen des Schiffes beispielsweise ab dem Zeitpunkt des Erfassens des aktuellen Schiffsbetriebszustandes anzeigen. Als externe Einflüsse kann der aktuelle Schiffsbetriebszustand beispielsweise eine Interaktion mit dem Land, wie z. B. eine Aufnahme eines Lotsen, oder Interaktionen auf dem Wasser, wie z. B. Einflüsse durch Krieg, Wetter, Seenot, etc. aufweisen. Somit wird ermöglicht mit dem Verfahren vielfältige unvorhergesehene Ereignisse während dem Betrieb des Schiffes zu erfassen und zu vermeiden, dass diese Ereignisse den Betrieb des Schiffes stören.

Gemäß einem Ausführungsbeispiel kann der aktuelle Schiffsbetriebszustand zu bestimmten Zeitpunkten oder bei Ereignissen erfasst werden. So kann das Verfahren beispielsweise den aktuellen Schiffsbetriebszustand alle fünf Minuten, einmal pro Stunde, einmal pro Tag oder bei Eintreten eines Ereignisses, wie z. B. einem Signal von den Maschinen des Schiffes, von den Arbeitsterminals der Crew, von der elektronischen Seekarte oder von der Landstation erfassen. Somit ist das Verfahren ausgelegt, um automatisch und selbstständig den Betrieb des Schiffes zu optimieren und effizient und sicher zu gestalten. Optional ist es auch möglich, dass der aktuelle Schiffsbetriebszustand mittels des Verfahrens kontinuierlich während der kompletten Reise des Schiffes erfasst wird.

Gemäß einem Ausführungsbeispiel können der Schiffsreiseplan und/oder der aktualisierte Schiffsreiseplan abhängig von einer Schiffsroute sein. So kann beispielsweise der Aufgabenzeitplan für die Crew des Schiffes abhängig von dem einen oder den mehreren Abschnitten der Reise, wie z. B. einem Hafenandockabschnitt und einem Seefahrtabschnitt, sein. So kann der eine oder die mehreren definierten Schiffsbetriebszustände des Schiffsreiseplans und des aktualisierten Schiffsreiseplans während einer Seefahrt beispielsweise von dem einen oder den mehreren definierten Schiffsbetriebszustände während einer Hafenliegezeit abweichen. Somit kann das Verfahren individuell angepasst an die Schiffsroute den Betriebs des Schiffes optimieren und effizient und sicher gestalten.

Ein Ausführungsbeispiel schafft ein Computerprogramm mit einem Programmcode zur Durchführung des Verfahrens, wenn, wenn das Programm auf einem Computer abläuft.

Ein Ausführungsbeispiel schafft eine Vorrichtung zum Betrieb eines Schiffes mit einer Verarbeitungseinrichtung des Schiffes, die konfiguriert sein kann, um einen Schiffsreiseplan z. B. von einer Landstation, von einem USB-Stick, von einer App und/oder über eine Eingabe in eine Benutzeroberfläche einer Vorrichtung auf dem Schiff zu erhalten, wobei der Schiffsreiseplan für einen oder mehrere Abschnitte einer Reise des Schiffes einen oder mehrere definierte Schiffsbetriebszustände aufweist; um während der Reise, einen aktuellen Schiffsbetriebszustand des Schiffes zu erfassen, wobei der aktuelle Schiffsbetriebszustand zeitlich einem der definierten Schiffsbetriebszuständen des Schiffsreiseplans zugeordnet ist; und um den aktuellen Schiffsbetriebszustand mit dem zeitlich zugeordneten definierten Schiffsbetriebszustand des Schiffsreiseplans abzugleichen, um ansprechend auf Abweichungen des aktuellen Schiffsbetriebszustandes von dem definierten Schiffsbetriebszustand einen aktualisierten Schiffsreiseplan zu berechnen. Ferner kann die Vorrichtung konfiguriert sein, um den aktualisierten Schiffsreiseplan basierend auf einem Modell zu berechnen, das betriebsrelevante Parameter für den Betrieb des Schiffes berücksichtigt. Der Schiffsreiseplan und/oder der aktualisierte Schiffsreiseplan können z. B. einen Aufgabenzeitplan für eine Crew des Schiffes für die Reise aufweisen.

### Figurenkurzbeschreibung

Ausführungsbeispiele gemäß der vorliegenden Erfindung werden nachfolgend Bezug nehmend auf die beiliegenden Figuren näher erläutert. Hinsichtlich der dargestellten schematischen Figuren wird darauf hingewiesen, dass die dargestellten Funktionsblöcke sowohl als Elemente oder Merkmale der erfindungsgemäßen Vorrichtung als auch als entsprechende Verfahrensschritte des erfindungsgemäßen Verfahrens zu verstehen sind, und auch entsprechende Verfahrensschritte des erfindungsgemäßen Verfahrens davon abgeleitet werden können. Es zeigen:
- Fig. 1: eine schematische Darstellung einer Vorrichtung und eines Verfahrens zum Betrieb eines Schiffes gemäß einem Ausführungsbeispiel der vorliegenden Erfindung;
- Fig. 2: eine schematische Darstellung eines Aufgabenzeitplans für eine Crew eines Schiffes gemäß einem Ausführungsbeispiel der vorliegenden Erfindung;
- Fig. 3: ein Blockdiagramm eines Verfahrens zum Betrieb eines Schiffes gemäß einem Ausführungsbeispiel der vorliegenden Erfindung;
- Fig. 4: eine schematische Darstellung einer Anwendung eines Verfahrens zum Betrieb eines Schiffes gemäß einem Ausführungsbeispiel der vorliegenden Erfindung;
- Fig. 5: eine schematische Darstellung einer Anwendung eines Verfahrens mit Interaktion zu einer Landstation gemäß einem Ausführungsbeispiel der vorliegenden Erfindung;
- Fig. 6: eine schematische Darstellung einer Anwendung eines Verfahrens bei einer sehr engen Hafenreihenfolge gemäß einem Ausführungsbeispiel der vorliegenden Erfindung; und
- Fig. 7: eine schematische Darstellung einer Anwendung eines Verfahrens bei einem Ereignis auf einem Schiff gemäß einem Ausführungsbeispiel der vorliegenden Erfindung.

### Detaillierte Beschreibung der Ausführungsbeispiele gemäß den Figuren

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen oder ähnlichen Bezugszeichen versehen sind, so dass die in unterschiedlichen Ausführungsbeispielen dargestellte Beschreibung dieser Elemente untereinander austauschbar ist bzw. aufeinander angewendet werden kann.

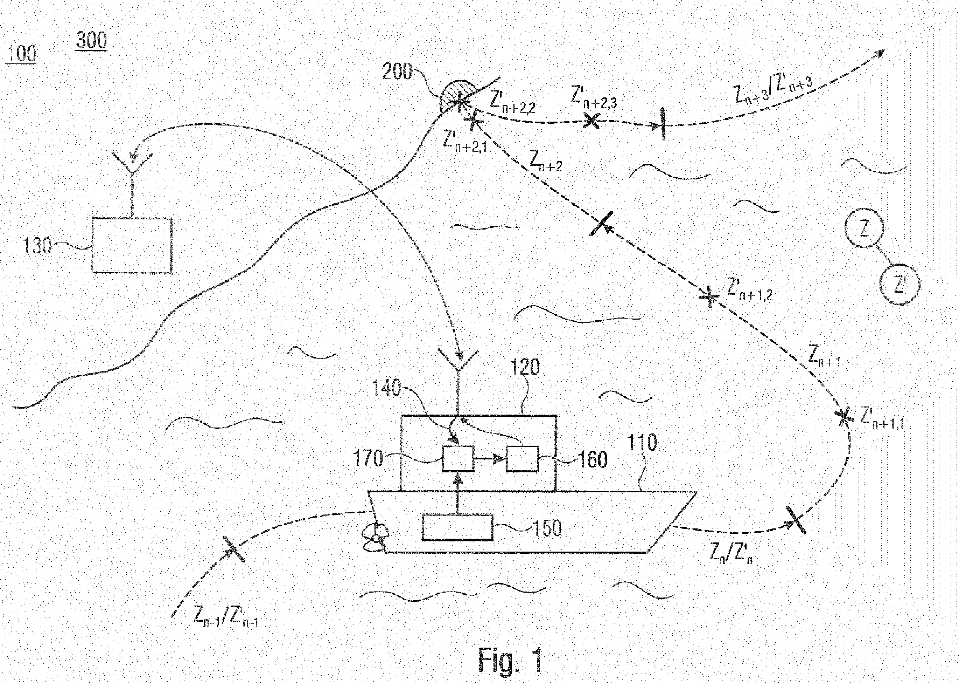

Fig. 1 zeigt eine schematische Darstellung einer Vorrichtung 100 zum Betrieb eines Schiffes 110 mit einer Verarbeitungseinrichtung 120 des Schiffes 110 und einer Landstation 130. Dabei kann die Verarbeitungseinrichtung 120 in oder auf dem Schiff 110 angeordnet sein und die Landstation 130 auf Festland. Gemäß einem Ausführungsbeispiel kann die Verarbeitungseinrichtung 120 mit der Landstation 130 per Funk kommunizieren. So kann die Vorrichtung 100 beispielsweise konfiguriert sein, um einen Schiffsreiseplan 140 von der Landstation 130 an die Verarbeitungseinrichtung 120 zu übertragen.

Der Schiffsreiseplan 140 kann für einen Abschnitt Z oder für mehrere Abschnitte Z₀ bis Zₖ (wobei k eine ganze positive Zahl darstellt) einer Reise des Schiffes 110 einen oder mehrere definierte Schiffbetriebszustände Z', Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃ aufweisen. Somit kann der Schiffsreiseplan 140 beispielsweise einen einzigen Abschnitt Z aufweisen, der z. B. die komplette Reise des Schiffes 110 darstellen kann. Alternativ kann die Reise auch in mehrere Abschnitte Z₀ bis Zₖ aufgeteilt werden, wobei in Fig. 1 die Abschnitte Zₙ₋₁ bis Zₙ₊₃ dargestellt sind und das Schiff 110 sich gerade in dem Abschnitt Zₙ befindet. In Fig. 1 ist somit ein Abschnitt der Reise des Schiffes 110 dargestellt. Der Schiffsreiseplan 140 kann beispielsweise für den einen Abschnitt Z einen Schiffsbetriebszustand Z' aufweisen, der für den kompletten Abschnitt Z einen Schiffsbetriebszustand des Schiffes 110 definiert. Dabei kann der definierte Schiffsbetriebszustand Z' stetig für jeden Zeitpunkt des Abschnitts Z einen Schiffsbetriebszustand des Schiffes 110 definieren. Genauso ist es möglich, dass der Abschnitt Zₙ₋₁ nur einen definierten Schiffsbetriebszustand Z'ₙ₋₁ aufweist, der Abschnitt Zₙ den definierten Schiffsbetriebszustand Z'ₙ aufweist und der Abschnitt Zₙ₊₃ den definierten Schiffsbetriebszustand Z'ₙ₊₃ aufweist und jeder der definierten Schiffsbetriebszustände Z'ₙ₋₁, Z'ₙ, Z'ₙ₊₃ für den jeweiligen korrespondierenden Abschnitt Zₙ₋₁, Zₙ, Zₙ₊₃ den Schiffsbetriebszustand des Schiffes 110 definiert. Alternativ ist es auch möglich, dass einer der Abschnitte Z₀ bis Zₖ mehrere definierte Schiffsbetriebszustände aufweist, wie z. B. der Abschnitt Zₙ₊₁, der den definierten Schiffsbetriebszustand Z'_{n+1,1} und den definierten Schiffsbetriebszustand Z'_{n+1,2} aufweisen kann, und der Abschnitt Zₙ₊₂, der die definierten Schiffsbetriebszustände Z'_{n+2,1}, Z'_{n+2,2} und Z'_{n+2,3} aufweisen kann. Dabei kann beispielsweise jeder der definierten Schiffsbetriebszustände Z'_{n+1,1}, Z'_{n+1,2}, Z'_{n+2,1}, Z'_{n+2,2} und Z'_{n+2,3} einen Zeitpunkt und eine Änderung des Schiffsbetriebszustandes des Schiffes 110 auf der Reise definieren.

Gemäß einem Ausführungsbeispiel können der eine oder die mehreren definierten Schiffsbetriebszustände Arbeitszeiten und Aufgaben der Crew des Schiffes 110, Positionen des Schiffes 110 auf der Reise und externe Einflüsse für den einen oder die mehreren Abschnitte Z, Z₀ bis Zₖ der Reise des Schiffes 110 aufweisen.

Gemäß einem Ausführungsbeispiel kann der Schiffsreiseplan 140 einen Aufgabenzeitplan für eine Crew des Schiffes 110 für die Reise aufweisen. Der Aufgabezeitplan kann für die komplette Reise, also für alle Abschnitte der Reise des Schiffes 110 definieren, wann und wo auf dem Schiff 110 eine Tätigkeit von einem Crewmitglied durchgeführt werden soll, wobei der Aufgabenzeitplan diese Tätigkeiten spezifischen Crewmitgliedern zu den bestimmten Zeitpunkten auf der Reise zuordnet. Gemäß einem Ausführungsbeispiel kann der definierte Schiffsbetriebszustand den Aufgabenzeitplan für den einen oder die mehreren Abschnitte aufweisen. Der Aufgabenzeitplan kann beispielsweise im Abschnitt Zₙ in Form des definierten Schiffsbetriebszustandes Z'ₙ Aufgaben bzw. Tätigkeiten der Crew auf dem Schiff 110 während einer Seefahrt aufweisen und in dem Abschnitt Zₙ₊₂ z. B. in Form des definierten Schiffsbetriebszustandes Z'_{n+2,2} Arbeiten bzw. Tätigkeiten der Crew im Zusammenhang mit einem Hafen 200, an den das Schiff 110 angedockt sein kann, aufweisen.

Gemäß einem Ausführungsbeispiel kann der Schiffsreiseplan 140 abhängig von der Schiffsroute Z sein. So können beispielsweise die definierten Schiffsbetriebszustände Z'ₙ₋₁, Z'ₙ, Z'_{n+1,1}, Z'_{n+1,2} und Z'ₙ₊₃ seefahrtspezifische Schiffsbetriebszustände des Schiffes 110 aufweisen und die definierten Schiffsbetriebszustände Z'_{n+2,1}, Z'_{n+2,2} und Z'_{n+2,3} hafenspezifische Schiffsbetriebszustände des Schiffes 110 aufweisen.

Die Verarbeitungseinrichtung 120 der Vorrichtung 100 kann gemäß einem Ausführungsbeispiel konfiguriert sein, um während der Reise einen aktuellen Schiffsbetriebszustand 150 des Schiffes 110 zu erfassen. Der aktuelle Schiffsbetriebszustand 150 kann zeitlich einem der definierten Schiffsbetriebszuständen, z. B. gemäß Fig. 1 dem definierten Schiffsbetriebszustand Z'ₙ, des Schiffsreiseplans 140 zugeordnet sein. Somit kann der aktuelle Schiffsbetriebszustand 150 beispielsweise einen Schiffsbetriebszustand des Schiffes 110 zum Zeitpunkt des Erfassens des aktuellen Schiffsbetriebszustandes 150 definieren oder für den kompletten Abschnitt Zₙ oder für alle Zeitpunkte ab dem Zeitpunkt des Erfassens bis zum Ende der Reise (somit z. B. für einen Teil des Abschnitts Zₙ, für den kompletten Abschnitt Zₙ₊₁ bis Zₖ) definieren. Je nachdem kann somit der aktuelle Schiffsbetriebszustand 150 zumindest teilweise (z. B. nur zu dem Zeitpunkt des Erfassens) oder komplett dem definierten Schiffsbetriebszustand Z'ₙ oder zumindest teilweise dem definierten Schiffsbetriebszustand Z'ₙ und allen folgenden definierten Schiffsbetriebszuständen (z. B. von Z'_{n+1,1} bis Z'ₖ) zugeordnet sein.

Gemäß einem Ausführungsbeispiel kann die Verarbeitungseinrichtung 120 Schnittstellen zu einer elektronischen Seekarte, zu Maschinensensoren, zu Arbeitszeiterfassungsterminals der Crew und zu der Landstation 130 aufweisen, um den aktuellen Schiffsbetriebszustand 150 zu erfassen. Somit kann der aktuelle Schiffsbetriebszustand 150 aktuelle Zustände von Maschinen aufweisen, die von den Maschinensensoren des Schiffes 110 an die Verarbeitungseinrichtung 120 übertragen werden können. Dabei kann der aktuelle Schiffsbetriebszustand beispielsweise anzeigen, ob die Maschinen in einwandfreiem Zustand funktionieren, eine Wartung benötigen, beschädigt sind oder ausgefallen sind. Ferner kann der aktuelle Schiffsbetriebszustand 150 die aktuelle Position oder die aktuelle Schiffsroute des Schiffes 110, aktuelles Wetter, Seenot, aktuelle Kriegseinflüsse, etc. anzeigen, die die Verarbeitungseinrichtung 120 beispielsweise der elektronischen Seekarte entnehmen kann. Ferner kann der aktuelle Schiffsbetriebszustand externe Einflüsse aufweisen, wie z. B. eine Lotsenaufnahme durch das Schiff oder eine Betankung des Schiffes, was die Verarbeitungseinrichtung beispielsweise über die Landstation 130 erfassen kann. Aufgrund der Arbeitszeitterminals der Crew können Arbeitszeiten und erledigte Aufgaben der Crew automatisch registriert werden, wodurch der aktuelle Schiffsbetriebszustand 150 beispielsweise einen Arbeitszeitplan aufweist, der anzeigt, welche Aufgaben wann und von wem der Crew bis zum Zeitpunkt des Erfassens des aktuellen Schiffsbetriebszustandes 150 durchgeführt worden sind. In diesem Fall kann der aktuelle Schiffsbetriebszustand beispielsweise mit zeitgleichen definierten Schiffsbetriebszuständen abgeglichen werden, wobei die definierten Schiffsbetriebszustände Schiffsbetriebszustände des Schiffes 110 der Abschnitte Z₀ bis Zₙ, also vor dem Erfassen (wie z. B. Zₙ₋₁, Zₙ), darstellen können. Somit ist es möglich, dass der aktuelle Schiffsbetriebszustand definierten Schiffsbetriebszuständen Zₙ₋₁, Zₙ vor dem Erfassen zugeordnet werden kann, oder sogar allen definierten Schiffsbetriebszuständen Z', Z'ₙ₋₁, Z'ₙ, Z'_{n+1,1}, Z'_{n+1,2}, Z'_{n+2,1}, Z'_{n+2,2}, Z'_{n+2,3} und Z'ₙ₊₃ der Reise.

Gemäß einem Ausführungsbeispiel kann der aktuelle Schiffsbetriebszustand 150 zu bestimmten Zeitpunkten oder bei Ereignissen erfasst werden. So kann der aktuelle Schiffsbetriebszustand beispielsweise alle fünf Minuten, einmal pro Stunde oder einmal pro Tag erfasst werden. Alternativ ist es auch möglich, dass der aktuelle Schiffsbetriebszustand zu definierten Ereignissen erfasst wird, wie z. B. bei einem Signal, kommend von den Maschinensensoren des Schiffes 110, bei einem Signal kommend von der Landstation 130, bei einem Signal kommend von der elektronischen Seekarte oder bei einem Signal der Verarbeitungseinrichtung 120, wenn die Verarbeitungseinrichtung 120 beispielsweise mittels der Arbeitszeitterminals der Crew feststellt, dass schifffahrtspezifische Regularien nicht eingehalten werden und dies beispielsweise zu einer Überarbeitung der Crew führt. Das Ereignis der elektronischen Seekarte kann beispielsweise eine Schiffsroutenänderung des Schiffes 110 definieren, das Signal von den Maschinensensoren kann beispielsweise eine Beschädigung, einen Ausfall oder nötige Wartung definieren und das Signal der Landstation kann beispielsweise eine Verspätung des Lotsen als Ereignis definieren.

Die Verarbeitungseinrichtung 120 kann konfiguriert sein, um den aktuellen Schiffsbetriebszustand 150 mit dem zeitlich zugeordneten definierten Schiffsbetriebszustand Z'ₙ des Schiffsreiseplans 140 abzugleichen, um ansprechend auf Abweichungen des aktuellen Schiffsbetriebszustandes 150 von dem definierten Schiffsbetriebszustand Z'ₙ einen aktualisierten Schiffsreiseplan 160 zu berechnen. Die Berechnung des aktualisierten Schiffsreiseplans 160 kann auf einem Modell 170 basieren, das betriebsrelevante Parameter für den Betrieb des Schiffes 110 berücksichtigen kann.

Der aktualisierte Schiffsreiseplan 160 kann ebenso wie der Schiffsreiseplan einen Aufgabenzeitplan für die Crew des Schiffes 110 für die Reise aufweisen. Ferner kann der Schiffsreiseplan und/oder der aktualisierte Schiffsreiseplan 160 von der Schiffsroute Z abhängig sein. Der aktualisierte Schiffsreiseplan 160 kann einen oder mehrere aktualisierte definierte Schiffsbetriebszustände für den einen oder die mehreren Abschnitte Zₙ bis Zₖ ab dem Zeitpunkt der Erfassung des aktuellen Schiffsbetriebszustandes aufweisen. Dabei können der eine oder die mehreren aktualisierten definierten Schiffsbetriebszustände von dem einen oder den mehreren definierten Schiffsbetriebszuständen Z', Z'ₙ₋₁, Z'ₙ, Z'_{n+1,1}, Z'_{n+1,2}, Z'_{n+2,1}, Z'_{n+2,2}, Z'_{n+2,3} und Z'ₙ₊₃ abweichen, da die Abweichungen des aktuellen Schiffsbetriebszustandes 150 von den definierten Schiffsbetriebszuständen Z', Z'ₙ₋₁, Z'ₙ, Z'_{n+1,1}, Z'_{n+1,2}, Z'_{n+2,1}, Z'_{n+2,2}, Z'_{n+2,3} und Z'ₙ₊₃ in dem aktualisierten Schiffsreiseplan berücksichtigt wurden.

Das Modell 170 kann konfiguriert sein, um unter Berücksichtigung von betriebsrelevanten Parametern den Schiffsreiseplan 140 so anzupassen, dass der Betrieb des Schiffes 110 nicht zum Erliegen kommt bzw. nicht in großem Masse beeinflusst wird. Die betriebsrelevanten Parameter des Modells 170 können Wartungszeiten, Seefahrtszeiten, Hafenliegezeiten und sicherheitsrelevante Parameter, wie Crewruhezeiten, aufweisen. Diese betriebsrelevanten Parameter können vorgegeben oder von der Verarbeitungseinrichtung 120 automatisch angepasst werden. Das Modell 170 kann konfiguriert sein, um innerhalb der Wartungszeiten, Seefahrtszeiten und Hafenliegezeiten den Arbeitszeitplan des Schiffsreiseplans unter Miteinbeziehung der Abweichungen dahin gehend zu optimieren, dass z. B. Arbeitszeitenregelverstöße (gemäß schifffahrtspezifischer Regularien) vermieden werden und die Wartungszeiten, Seefahrtzeiten, Hafenliegezeiten und Crewruhezeiten eingehalten werden, wodurch ein reibungsloser und sicherer Betrieb des Schiffes 110 durch die Vorrichtung 100 gewährleistet werden kann. Gemäß einem Ausführungsbeispiel kann der sicherheitsrelevante Parameter Crewruhezeiten in einem Ausnahmezustand, z. B. Beschädigung von Maschinen/Schiff oder eine verspätete Hafenankunft, von dem Modell 170 verletzt werden, um den Betrieb des Schiffes 110 aufrechtzuerhalten. Das Modell 170 ist zwar ausgelegt, um die Crewruhezeiten möglichst einzuhalten, kann aber aufgrund von Ausnahmesituationen, wenn dies z. B. nicht mehr möglich ist, geringfügige Verletzungen der Crewruhezeiten in Kauf nehmen, um beispielsweise einen Stillstand des Schiffes 110 zu vermeiden.

Gemäß einem Ausführungsbeispiel kann zumindest einer der betriebsrelevanten Parameter, basierend auf den Abweichungen des aktuellen Schiffsbetriebszustandes 150 von dem definierten Schiffsbetriebszustand Z'ₙ des Schiffsreiseplans 140, angepasst werden. So können die Abweichungen beispielsweise eine Änderung der Schiffsroute Z anzeigen, wodurch unter Umständen die betriebsrelevanten Parameter Seefahrtszeiten und Hafenliegezeiten angepasst werden können. Zeigen die Abweichungen beispielsweise eine Überarbeitung der Crew (es wurden beispielsweise Crewruhezeiten nicht eingehalten), so können die Wartungszeiten angepasst werden und beispielsweise auf einen späteren Zeitpunkt verschoben werden, wenn die Crewruhezeiten wieder innerhalb der schifffahrtspezifischen Regularien gebracht worden sind.

Somit kann die Vorrichtung 100 automatisch den Betrieb des Schiffes 110 regeln und beispielsweise Anweisungen an die Crew des Schiffes 110 aufgrund des aktuellen Schiffsbetriebszustandes 150 bereitstellen und anpassen, ohne dass ein menschlicher Einfluss erfolgen muss. Die Vorrichtung erzeugt z. B. automatisch den angepassten Arbeitsplan, der der Crew bereitgestellt wird und durch die Crew abgeleistet wird, wobei die Arbeit durch die Vorrichtung überwacht werden kann.

Gemäß einem Ausführungsbeispiel kann das Modell 170 berücksichtigen, ob Aufgaben des Aufgabenzeitplans für die Crew zeitlich aufgeteilt und/oder auf mehrere Crewmitglieder aufgeteilt werden können. So kann der aktuelle Schiffsbetriebszustand 150 beispielsweise anzeigen, dass ein Crewmitglied in einer Nacht aufgrund von Reparaturen einer Maschine dreimal unerwartet außerhalb vorgesehener Zeitpunkte (z. B. angezeigt durch den Aufgabenzeitplan des Schiffsreiseplans 140 zu einem definierten Schiffsbetriebszustand) arbeiten musste und somit nun die Crewruhezeit einhalten sollte, damit schifffahrtspezifische Regularien eingehalten werden, wodurch aber Tätigkeiten, die der Aufgabenzeitplan des Schiffsreiseplans 140 für dieses Crewmitglied tagsüber vorgesehen hat, nicht eingehalten werden kann. Diese Arbeiten kann somit das Modell in dem aktualisierten Schiffsreiseplan 160 auf andere Crewmitglieder aufteilen, damit alle nötigen Aufgaben für den Betrieb des Schiffes 110 durchgeführt werden und somit der Betrieb des Schiffes 110 sichergestellt wird. Genauso können Aufgaben des Aufgabenzeitplans beispielsweise durch das Modell zeitlich aufgeteilt werden, wenn aufgrund der Abweichungen dringendere Aufgaben diesen Aufgaben vorangestellt werden sollten, um den Betrieb des Schiffes 110 sicherzustellen. Durch die Einhaltung der Crewruhezeit wird ein sicherer Betrieb gewährleistet, da Unfälle oder Betriebsfehler aufgrund von Übermüdung vermeidbar sind. Hierdurch können Verzögerungen im Betrieb des Schiffes vermieden oder minimiert werden. Ebenso können Strafen aufgrund von Nicht-Beachtung schifffahrtspezifischer Regularien vermieden werden.

Gemäß einem Ausführungsbeispiel kann die Berechnung des aktualisierten Schiffsreiseplans 160 basierend auf dem Modell 170 in einer Zeit kürzer als fünf Minuten, kürzer als einer Minute oder kürzer als einer Sekunde nach Feststellung der Abweichungen des aktuellen Schiffsbetriebszustandes 150 von dem definierten Schiffsbetriebszustand Z'ₙ des Schiffsreiseplans 140 erfolgen. Somit kann die Vorrichtung 100 sehr schnell auf die Abweichungen reagieren und verhindern, dass der Betrieb des Schiffes 110 eingeschränkt wird.

Gemäß einem Ausführungsbeispiel ist das Modell 170 ein statisches Modell, mit dem beispielsweise Aufgaben zur Sicherstellung des Betriebs des Schiffes 110 so realitätsnah wie möglich definiert und klassifiziert werden können. Dieses Modell wird optional nicht angepasst. Mit einem Verfahren, das die Vorrichtung 100 beispielsweise ausführen kann, wird beispielsweise nur eine Aufgabenverteilung angepasst (z. B. der Aufgabenzeitplan), wobei die Aufgaben trotzdem einer gleichen Struktur unterliegen können und das Modell z. B. hierdurch nicht verändert wird.

In anderen Worten zeigt Fig. 1 auch ein Verfahren 300 zum Betrieb des Schiffes 110, das basierend auf dem Aufgabemodell 170 als Reaktion auf Änderungen (z. B. den Abweichungen des aktuellen Schiffsbetriebszustandes 150 von dem definierten Schiffsbetriebszustand Z'ₙ des Schiffsreiseplans 140) des Schiffsbetriebszustandes eine Verteilung der für den Schiffsbetrieb erforderlichen Aufgaben, unter Berücksichtigung von sicherheitsrelevanten Aspekten wie z. B. gesetzlichen Ruhezeiten (z. B. der Crewruhezeit), anpasst. Schnittstellen zum elektronischen Kartensystem (z. B. der elektronischen Seekarte) und zu weiteren Komponenten des integrierten Brückensystems an Bord ermöglichen das automatische Erfassen der Änderungen der Schiffsreise (der Schiffsroute Z). Die Reise kann in der elektronischen Seekarte hinterlegt sein (beispielsweise als Schiffsreiseplan 140) und einen Schiffsbetriebszustand des Schiffes 110 eindeutig definieren.

Ein Vorteil des erfindungsgemäßen Ansatzes ist die Ermöglichung einer sehr schnellen Berechnung und Analyse von verschiedenen Strategien, ohne den Schiffsbetrieb direkt negativ zu beeinflussen. Das Model und die resultierenden Ergebnisse bieten eine belastbare Planungs- und Entscheidungsunterstützung für verschiedene Ebenen des Personalmanagements an Bord und an Land. Der Einsatz der Software bietet zudem die Möglichkeit Arbeitsprozesse und Aufgabenverteilungen effizienter zu gestalten sowie das Arbeitszeitenmanagement zu optimieren. Neben der Reduktion von administrativen Aufwänden wird insbesondere die Schiffssicherheit erhöht, z. B. durch Vermeidung von Überarbeitung der Crew.

Über die Landstation 130 bzw. auf dem Schiff 110 über die Verarbeitungseinrichtung 120 ist es möglich Basisdaten des Modells 170, wie z. B. Häfen, Schiffe, Positionen/Schiffsroute, Aufgaben/Tätigkeiten, Schiffsbetriebszustände, Zuweisungen zu Schiffsbetriebszuständen und eine Crewliste, manuell oder automatisch in der Vorrichtung 100 zu definieren und zu verändern. Diese Basisinformationen können beispielsweise in dem Schiffsreiseplan 140 hinterlegt sein und durch das Modell 170 bei Auftreten von unerwarteten von dem Schiffsreiseplan 140 abweichenden Situationen zu dem aktualisierten Schiffsreiseplan 160 angepasst werden. Dabei kann das Modell 170 betriebsrelevante Parameter wie eine Schiffsklasse des Schiffes 110, Schiffsroutendetails z. B. die Seefahrtzeiten und Hafenliegezeiten, minimale/maximale Anzahl an Crewmitgliedern pro Position auf dem Schiff 110, schifffahrtspezifische Regularien, wie z. B. Regularien zur Arbeitszeit, Regularien zur Crewruhezeit und/oder Regularien für einen Wachrhythmus, und/oder erlaubte Ausnahmen der schifffahrtspezifischen Regularien, berücksichtigen. Die Verarbeitungseinrichtung 120 kann beispielsweise ausgelegt sein, um z. B. per Funk, Informationen wie z. B. den aktualisierten Schiffsreiseplan 160 an die Landstation 130 zu übertragen. Ferner können über die Funkverbindung zwischen der Landstation 130 und der Verarbeitungseinrichtung 120 Informationen synchronisiert werden. Bei den Informationen kann es sich beispielsweise um einen Bericht über Arbeitszeiten und Crewruhezeiten handeln oder um einen Bericht über Gründe für Nicht-Einhaltung von schifffahrtspezifischen Regularien. Diese Informationen kann die Vorrichtung 100 automatisch erfassen und bereitstellen.

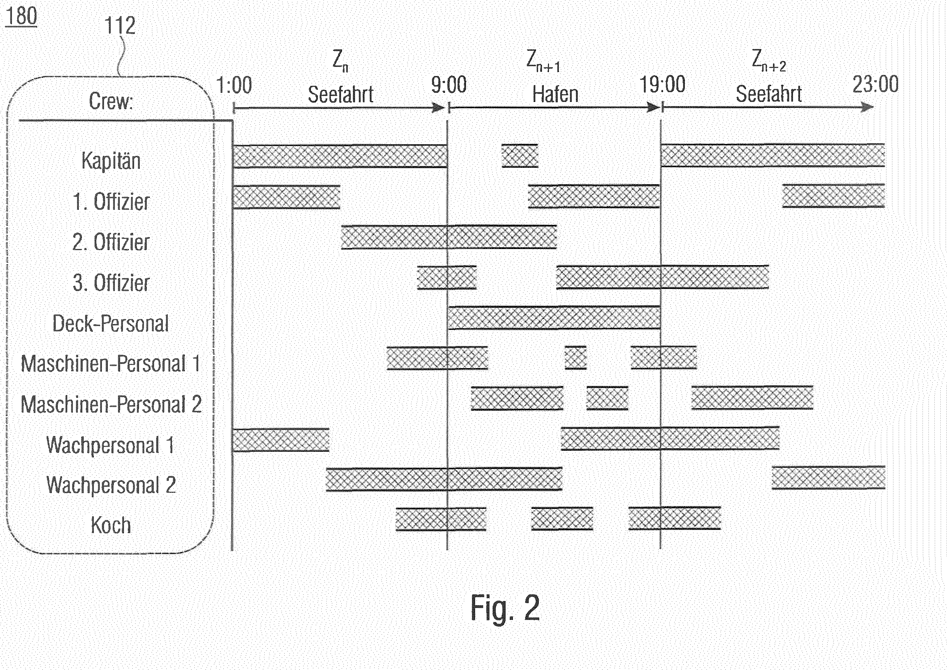

Fig. 2 zeigt einen Ausschnitt eines Aufgabenzeitplans 180 für eine Crew 112 eines Schiffes für drei Abschnitte Zₙ bis Zₙ₊₂ einer Reise. Ein Schiffsreiseplan oder ein aktualisierter Schiffsreiseplan kann den Aufgabenzeitplan 180 aufweisen. In Form von Balken sind in dem Aufgabenzeitplan 180 pro Abschnitt Zₙ bis Zₙ₊₂ der Reise Arbeitszeiten der Crew 112 eingetragen. Dabei kann in den Arbeitszeitbalken angezeigt werden, welche Tätigkeiten auf dem Schiff durch das jeweilige Crewmitglied der Crew 112 zu dem jeweiligen Zeitpunkt durchgeführt werden sollte. Zwischen den einzelnen Balken ist z. B. eine Crewruhezeit eingetragen. Der Aufgabenzeitplan 180 ist beispielsweise von der Schiffsroute Zₙ bis Zₙ₊₂ abhängig. So fallen beispielsweise während der Seefahrt Zₙ und Zₙ₊₂ weniger und andere Tätigkeiten an als während der Hafenliegezeit Zₙ₊₁.

Der in Fig. 2 dargestellte Aufgabenzeitplan 180 kann beispielsweise ein anfänglicher von einer Landstation für das Schiff vorgegebener Aufgabenzeitplan sein. Ebenso kann der dargestellte Aufgabenzeitplan ein aktualisierter Aufgabenzeitplan sein, der beispielsweise aufgrund eines unvorhergesehenen Ereignisses auf der Schiffsroute des Schiffes auch die Verarbeitungseinrichtung des Schiffes mittels eines Modells ausgehend von dem anfänglichen Aufgabenzeitplan angepasst werden, um den Betrieb des Schiffes unter Einbeziehung des unerwarteten Ereignisses aufrechtzuerhalten. Somit kann der Aufgabenzeitplan 180 des aktualisierten Schiffsreiseplans von dem Aufgabenzeitplan 180 des anfänglichen Schiffsreiseplans abweichen.

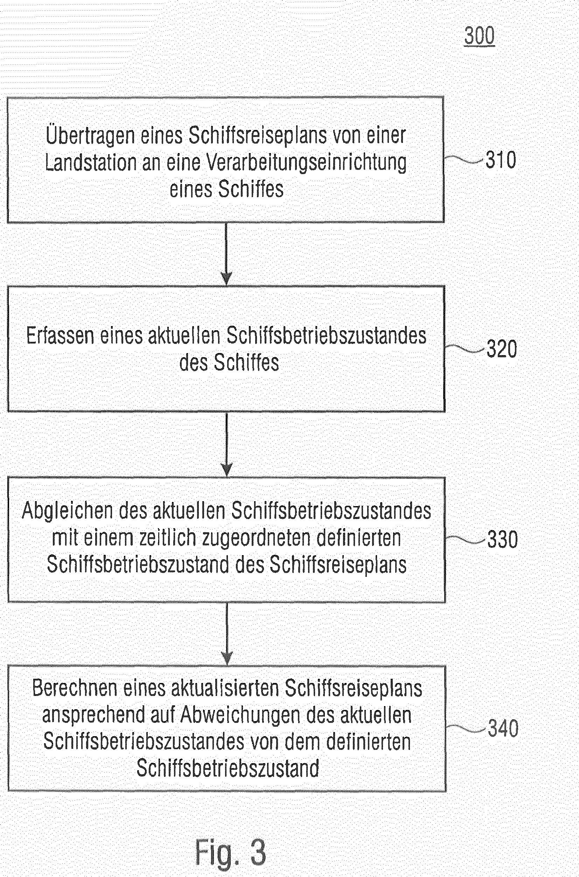

Fig. 3 zeigt ein Blockdiagramms eines Verfahrens 300 zum Betrieb eines Schiffes mit dem Schritt Übertragen 310 eines Schiffsreiseplans von einer Landstation an eine Verarbeitungseinrichtung des Schiffes. Der Schiffsreiseplan umfasst für einen oder mehrere Abschnitte einer Reise des Schiffes einen oder mehrere definierte Schiffsbetriebszustände. Optional kann der Schiffsreiseplan abhängig von einer Schiffsroute sein.

Während der Reise erfasst 320 das Verfahren 300 einen aktuellen Schiffsbetriebszustand des Schiffes. Der aktuelle Schiffsbetriebszustand ist zeitlich einem der definierten Schiffsbetriebszustände des Schiffsreiseplans zugeordnet. Optional kann der aktuelle Schiffsbetriebszustand mittels einer Schnittstelle der Verarbeitungseinrichtung zu einer elektronischen Seekarte, zu Maschinensensoren, zu Arbeitszeitterminals der Crew und zu der Landstation erfasst werden. Der aktuelle Schiffsbetriebszustand kann aktuelle und zukünftige Arbeitszeiten und Aufgaben der Crew, aktuelle Zustände von Maschinen, aktuelle und zukünftige Positionen des Schiffes und externe Einflüsse aufweisen. Gemäß einem Ausführungsbeispiel kann der aktuelle Schiffsbetriebszustand zu bestimmten Zeitpunkten oder bei Ereignissen erfasst werden.

Das Verfahren 300 gleicht den aktuellen Schiffsbetriebszustand mit dem zeitlich zugeordneten definierten Schiffsbetriebszustand des Schiffsreiseplans ab 330, um ansprechend auf Abweichungen des aktuellen Schiffsbetriebszustandes von dem definierten Schiffsbetriebszustand einen aktualisierten Schiffsreiseplan zu berechnen 340. Die Berechnung 340 des aktualisierten Schiffsreiseplans kann auf einem Modell basieren, das betriebsrelevante Parameter für den Betrieb des Schiffes berücksichtigt. Ferner kann der aktualisierte Schiffsreiseplan einen Aufgabenzeitplan für die Crew des Schiffes für die Reise aufweisen. Gemäß einem Ausführungsbeispiel können die betriebsrelevanten Parameters des Modells Wartungszeiten, Seefahrtszeiten, Hafenliegezeiten und sicherheitsrelevante Parameter, wie Crewruhezeiten, aufweisen. Bei dem Berechnen 340 kann das Modell den sicherheitsrelevanten Parameter Crewruhezeiten in einem Ausnahmezustand verletzen, um den Betrieb des Schiffes aufrechtzuerhalten. Gemäß einem Ausführungsbeispiel kann bei dem Berechnen 340 des aktualisierten Schiffsreiseplans zumindest einer der betriebsrelevanten Parameter, basierend auf den Abweichungen des aktuellen Schiffsbetriebszustandes von dem definierten Schiffsbetriebszustand des Schiffsreiseplans, angepasst werden. Ferner kann das Modell berücksichtigen, ob Aufgaben des Aufgabenzeitplans für die Crew zeitlich aufgeteilt und/oder auf mehrere Crewmitglieder aufgeteilt werden können. Gemäß einem Ausführungsbeispiel kann das Berechnen 340 des aktualisierten Schiffsreiseplans, basierend auf dem Modell, in einer Zeit kürzer als fünf Minuten nach Feststellung der Abweichungen des aktuellen Schiffsbetriebszustandes von dem definierten Schiffsbetriebszustand des Schiffsreiseplans erfolgen.

Es gibt verschiedene Auslöser für Änderungen im Schiffsbetriebszustand eines Schiffes. In den kommenden Beispielen werden zwei Typen betrachtet, Änderungen, welche von der Landstation und welche, die vom Schiff ausgelöst werden.

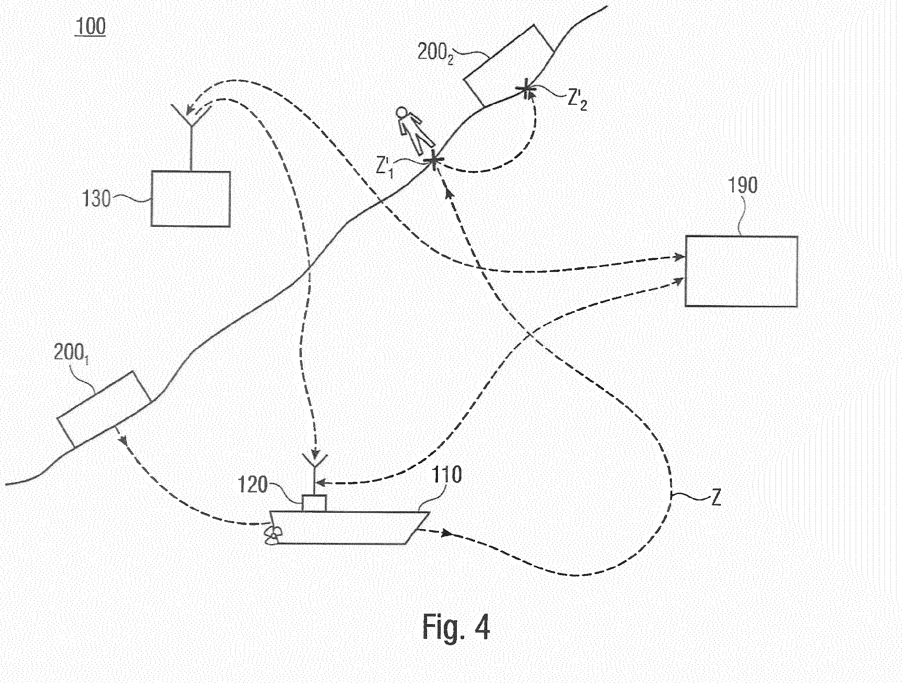

Fig. 4 zeigt die Vorrichtung 100 im Betrieb. Gemäß einem Schiffsreiseplan, der von einer Landstation 130 an eine Verarbeitungseinrichtung 120 eines Containerschiffes 110, beispielsweise per Funk übertragen werden kann, fährt das Containerschiff 110 beispielsweise vom Bremerhaven 200₁ nach Rotterdam 200₂. Der Schiffsreiseplan weist z. B. einen einzigen Abschnitt Z der Reise des Schiffes 110 auf. Der Abschnitt umfasst zeitlich beispielsweise einen kompletten Tag und ist auf den 23. September 2018 datiert. In diesem Abschnitt Z liegen zwei definierte Schiffsbetriebszustände Z'₁ und Z'₂ vor. Ein erster definierte Schiffsbetriebszustand Z'₁ ist z. B. auf 09:00 Uhr datiert und umfasst eine Aufnahme eines Lotsen an Bord des Schiffes 110, um das Schiff 110 pünktlich und sicher in dem Hafen Rotterdam 200₂ anzulegen. Ein zweiter definierter Schiffsbetriebszustand Z'₂ ist beispielsweise auf 10:00 Uhr datiert und betrifft eine geplante Ankunftszeit in Rotterdam 200₂. Die geplante Ankunftszeit in Rotterdam ist beispielsweise in einem elektronischen Kartensystem 190 hinterlegt.

Um 07:30 Uhr sendet die Landstation 130 eine aufdatierte Reise in das elektronische Kartensystem 190, wonach sich die Ankunft in Rotterdam 200₂ und somit auch die Lotsenübernahme jeweils um drei Stunden nach hinten verschieben. Laut der neuen Reise soll das Schiff 110 um 08:30 Uhr kurz vor Amsterdam den Anker werfen und auf den verspäteten Lotsen warten. Der aktuelle Schiffsbetriebszustand ergibt sich aus diesen von der Landstation 130 an die elektronische Seekarte 190 übertragenen Daten der Reise, wobei der aktuelle Schiffsbetriebszustand beispielsweise über eine Schnittstelle der Verarbeitungseinrichtung 120 zu der Seekarte 190 erfasst werden kann.

Der aktuelle Schiffsbetriebszustand umfasst beispielsweise einen zeitlichen Abschnitt ab dem Erfassen (z. B. 07:30 Uhr) des aktuellen Schiffsbetriebszustandes bis zu der Ankunft in Rotterdam 200₂. Somit kann der aktuelle Schiffsbetriebszustand sowohl dem ersten definierten Schiffsbetriebszustand Z'₁ als auch dem zweiten definierten Schiffsbetriebszustand Z'₂ zeitlich zugeordnet werden, da beide definierten Schiffsbetriebszustände innerhalb des zeitlichen Abschnitts des aktuellen Schiffsbetriebszustandes liegen. Bei einem Abgleich des aktuellen Schiffsbetriebszustandes mit den zeitlich zugeordneten definierten Schiffsbetriebszuständen Z'₁ und Z'₂ des Schiffsreiseplans kann die Verarbeitungseinrichtung 120 Abweichungen feststellen, aufgrund derer die Verarbeitungseinrichtung 120 einen aktualisierten Schiffsreiseplan berechnet, der beispielsweise Aufgaben für den sicheren und reibungslosen Betrieb des Systems Schiff neu verteilt. Diese Verteilung wird beispielsweise durch eine Änderung in der elektronischen Seekarte 190 (z. B. in dem Elektronisches Kartendarstellungs- und Informationssystem = ECDIS) ausgelöst und durch die Vorrichtung 100 ermöglicht und zwar so, dass vorher geleistete Arbeitsstunden der Seefahrer (Crew) an Bord des Schiffes 110 beispielsweise in die Aufgabenverteilung miteinbezogen und gleichzeitig die Ruhezeiten (z. B. Crewruhezeiten) garantiert werden und somit beispielsweise ein neuer Aufgabenzeitplan von der Vorrichtung 100 berechnet wird.

Anhand von Fig. 4 wird ein alternatives Beispiel einer Anwendung der Vorrichtung 100 erklärt. In diesem Ausführungsbeispiel kann der zweite definierte Schiffsbetriebszustand Z'₂ zusätzlich die Information aufweisen, dass das Schiff 110 in Rotterdam 200₂ eine Hafenliegezeit von zwölf Stunden aufweist, in diesen zwölf Stunden x Container umgeladen werden sollen und in diesem Hafen eine Proviantübernahme geplant ist.

Aus der Landstation 130 können neue Informationen über die Reise in das elektronische Kartensystem 190 geschickt werden. Diese neuen Informationen können beispielsweise eine Änderung der Anzahl der Container, die umgeladen werden müssen, und eine Information, dass in Rotterdam 200₂ das Schiff 110 für zehn Stunden betankt werden soll, aufweisen. Damit weicht der aktuelle Betriebszustand (y anstelle von x Container sollen umgeladen werden und das Schiff soll in Rotterdam 200₂ für zehn Stunden lang tanken) von einem zeitlich zugeordneten definierten Schiffsbetriebszustand Z'₂ ab. Damit hat sich der Betriebszustand des Schiffes 110 geändert, obwohl der Zeitplan (die Hafenliegezeit) sich nicht geändert hat. Die neuen Aufgaben müssen in den aktualisierten Schiffsreiseplan mitaufgenommen werden und zwar so, dass alle anderen notwendigen Aufgaben ohne Einschränkung und Verletzung der Ruhezeit und des Betriebs des Schiffes erledigt werden können. Diese Neuverteilung erfolgt automatisch durch die Vorrichtung.

Gemäß einem Ausführungsbeispiel ist die Vorrichtung 100 nicht darauf beschränkt, Aufgaben für den Schiffsbetrieb neu zu verteilen, sondern kann auch konfiguriert sein, um automatisch Zeitintervalle für Wartungsarbeiten von Maschinen des Schiffes 110 zu berechnen. Hierdurch können Wartungsarbeiten für kritische Systeme besser geplant und falls notwendig vorgezogen oder zeitlich nach hinten verschoben werden, ohne den Betriebszustand des Schiffes 110 negativ ändern zu müssen.

Somit ist die Vorrichtung 100 ausgebildet, um Änderungen durch die Landstation 130 (beispielsweise Ankunftszeiten), Änderungen der Landungsoperationen im Hafen und Planungen der Wartungsarbeiten durchzuführen.

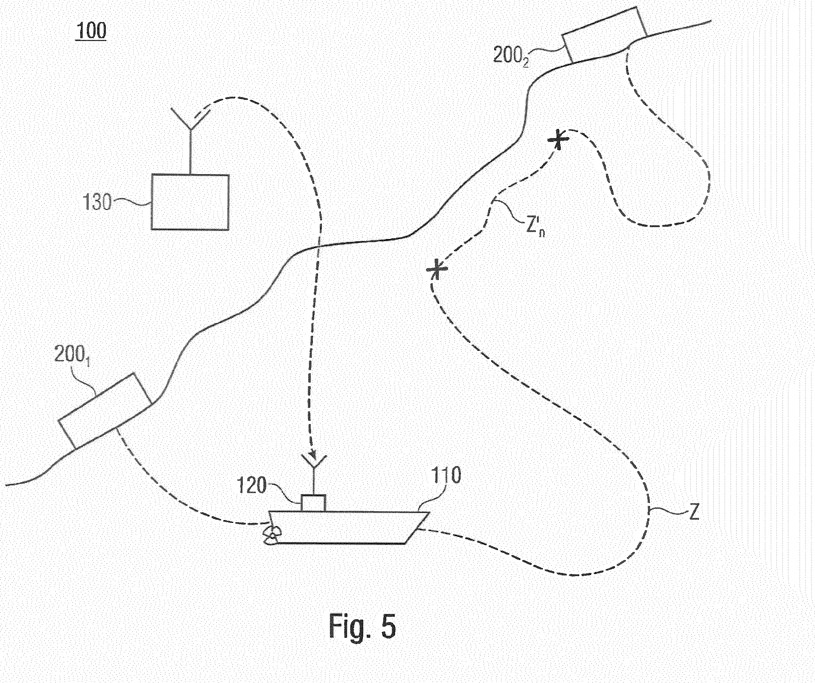

Fig. 5 zeigt ein weiteres Ausführungsbeispiel einer Vorrichtung 100 im Betrieb. Gemäß einem Schiffsreiseplan, der von einer Landstation 130 an eine Verarbeitungseinrichtung 120 eines Schiffes 110 übertragen wurde, fährt das Schiff 110 von Djibouti 200₁ nach Südafrika 200₂. Es ist 10:00 Uhr morgens und gemäß dem Schiffsreiseplan wird das Schiff 110 in sechs Stunden für zehn Stunden Z'ₙ vor der Küste von Somali fahren. Somit umfasst der Schiffsreiseplan für einen Abschnitt Z der Reise des Schiffes 110 einen definierten Schiffsbetriebszustand Z'ₙ, der besagt, dass von 16:00 Uhr bis 02:00 Uhr morgens des nächsten Tages das Schiff 110 vor der Küste von Somalia fahren wird.

Um 12:00 Uhr kann beispielsweise aus der Landstation 130 eine neue Reise an die Verarbeitungseinrichtung 120 des Schiffes 110 übertragen werden. Diese neue Reise beinhaltet z. B. die gleichen geografischen Wegpunkte mit dem gleichen Zeitplan wie aus dem Schiffsreiseplan, allerdings sind die Sicherheitsanforderungen für das Seegebiet vor Somalia geändert worden. Das Gebiet wurde aufgrund von Piraterieereignissen des letzten Tages eine Risikostufe höher klassifiziert. Die Landstation 130 fordert, dass mehr Seefahrer als vorher gleichzeitig Wachbereitschaft haben. Der Schiffsbetriebszustand hat sich verändert, und um die Sicherheit zu garantieren, muss so schnell wie möglich eine neue Aufgabenverteilung durch die Vorrichtung 100 vorgenommen werden, um den Betrieb des Schiffes 110 zu gewährleisten.

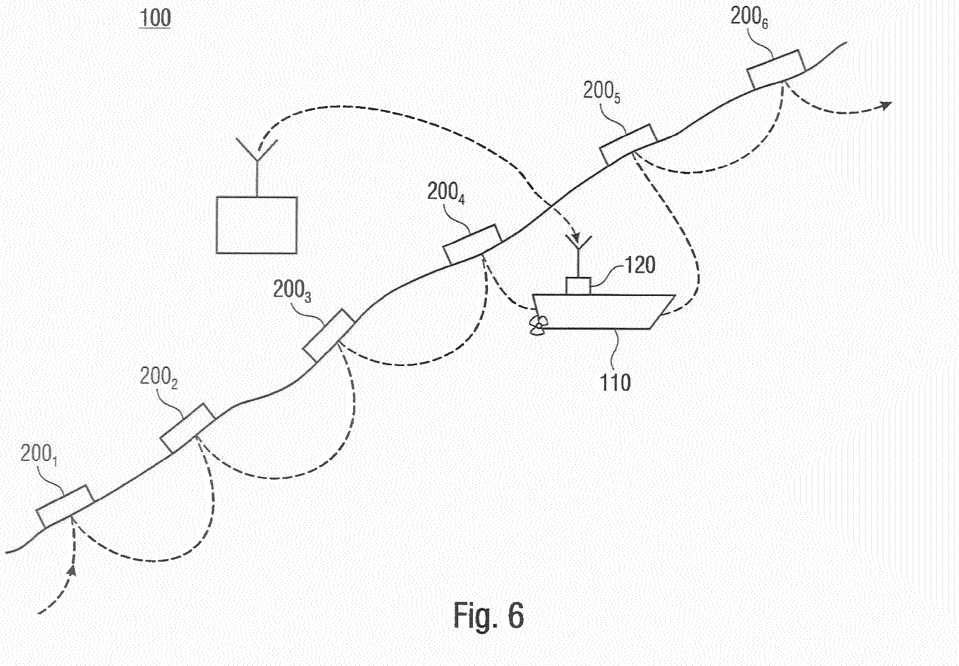

Fig. 6 zeigt ein weiteres Ausführungsbeispiel der Vorrichtung 100 im Betrieb. Ein Containerschiff 110 fährt eine sehr enge Hafenreihenfolge 200₁ bis 200₆ in Südostasien, die mit einer hohen Arbeitslast für die gesamte Crew verbunden ist. Die geleisteten Arbeitsstunden aller Seefahrer werden an Bord beispielsweise durch eine Schnittstelle einer Verarbeitungseinrichtung 120 der Vorrichtung 100 zu Arbeitszeitterminals der Crew automatisch erfasst. Die Überschreitung einer gegebenen Belastungsgrenze der Crew signalisiert z. B. eine Betriebszustandsänderung des Schiffes 110 und löst somit eine Anpassung der Aufgabenverteilung aus, um die Erfüllung der Sicherheitsanforderung für den neuen Zustand zu garantieren. So kann die Vorrichtung 100 beispielsweise Crewmitgliedern, die an ihre Belastungsgrenze gestoßen sind, eine Crewruhepause gönnen und anstelle dieser Crewmitglieder anderen Crewmitgliedern, die zu diesem Zeitpunkt zu erledigenden Aufgaben zur Sicherstellung des Betriebs des Schiffes 110 zuweisen.

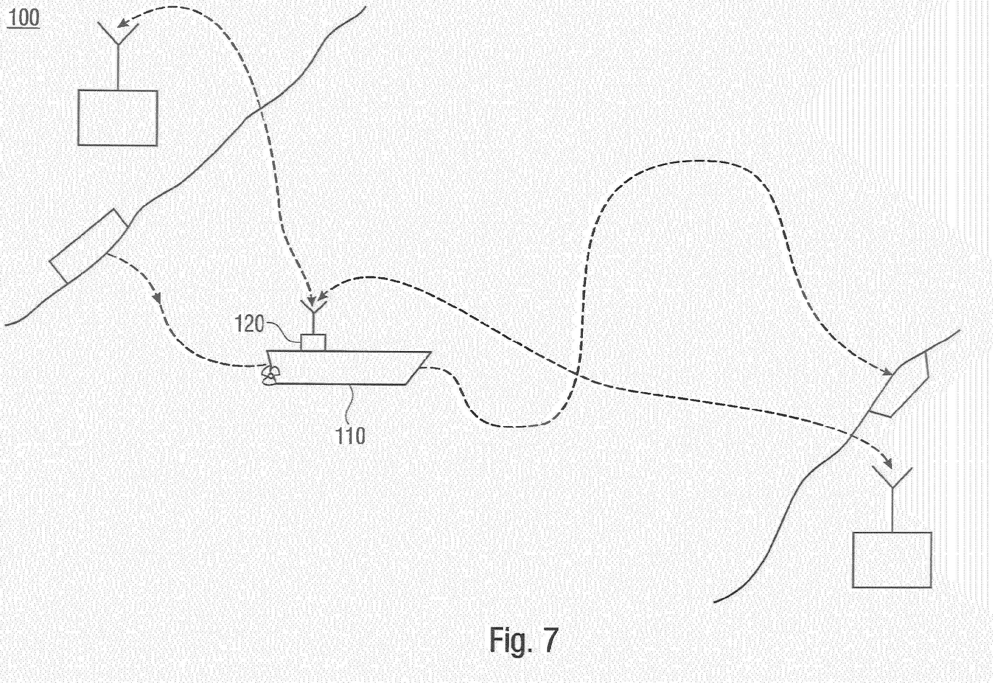

Fig. 7 zeigt ein Ausführungsbeispiel einer Vorrichtung 100 im Betrieb. Gemäß einem Schiffsreiseplan fährt ein Schiff 110 von Europa nach Nordamerika. Während der Überfahrt kann ein Notsignal aufgrund eines Feuers im Laderaum automatisch ausgelöst werden. Der Schiffsbetriebszustand hat sich selbstverständlich verändert. Eine Aufgabenverteilung zum Meistern des Notfalls und zum gleichzeitigen Fahren des Schiffes muss so schnell wie möglich verfügbar sein. Mit dem automatischen Auslöser des Notfalls wird dieser Ausnahmezustand von der Vorrichtung 100 automatisch übernommen und durch eine Verarbeitungseinrichtung 120 bei einer Berechnung eines aktualisierten Schiffsreiseplans berücksichtigt. Somit ist die Vorrichtung 100 ausgelegt, um den Betrieb des Schiffes 110 auch bei unerwarteten Extremsituationen aufrechtzuerhalten.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hard-ware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (300) zum Betrieb eines Schiffes (110) mit folgenden Schritten:
Erhalten eines Schiffsreiseplans (140) mittels einer Verarbeitungseinrichtung (120) des Schiffes (110), wobei der Schiffsreiseplan (140) für einen oder mehrere Abschnitte (Z, Z₀ bis Zₖ) einer Reise des Schiffes (110) einen oder mehrere definierte Schiffsbetriebszustände (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) aufweist;
während der Reise, Erfassen (320) eines aktuellen Schiffsbetriebszustandes (150) des Schiffes (110), wobei der aktuelle Schiffsbetriebszustand (150) zeitlich einem der definierten Schiffsbetriebszuständen des Schiffsreiseplans (140) zugeordnet ist und wobei der aktuelle Schiffsbetriebszustand (150) mittels einer Schnittstelle der Verarbeitungseinrichtung (120) zu Maschinensensoren und
zu einer elektronischen Seekarte (190), und/oder
zu Arbeitszeitterminals der Crew (112) erfasst wird; und
wobei die ein oder mehreren definierten Schiffsbetriebszustände (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) und der aktuelle Schiffsbetriebszustand (150) Zustände von Maschinen, und
aktuelle und/oder zukünftige Positionen des Schiffes (110) und/oder
externe Einflüsse aufweisen;
Abgleichen (330) des aktuellen Schiffsbetriebszustandes (150) mit dem zeitlich zugeordneten definierten Schiffsbetriebszustand des Schiffsreiseplans (140), um ansprechend auf Abweichungen des aktuellen Schiffsbetriebszustandes (150) von dem definierten Schiffsbetriebszustand einen aktualisierten Schiffsreiseplan (160) zu berechnen (340),
Berechnen von Zeitintervallen für Wartungsarbeiten von Maschinen des Schiffes (110),
automatisches Regeln des Betriebs des Schiffes (110) mittels des aktualisierten Schiffsreiseplans (160),
wobei der Schiffsreiseplan (140) und/oder der aktualisierte Schiffsreiseplan (160) einen Aufgabenzeitplan (180) für eine Crew (112) des Schiffes (110) für die Reise aufweist, wobei der Aufgabenzeitplan die Zeitintervalle für die Wartungsarbeiten der Maschinen des Schiffes anzeigt.

2. Verfahren (300) gemäß Anspruch 1, wobei das Verfahren (300) ein Übertragen (310) eines Schiffsreiseplans (140) von einer Landstation (130) an eine Verarbeitungseinrichtung (120) des Schiffes (110) aufweist.

3. Verfahren (300) gemäß Anspruch 1 oder Anspruch 2, wobei die betriebsrelevanten Parameter des Modells (170) Wartungszeiten, Seefahrtzeiten, Hafenliegezeiten und/oder sicherheitsrelevante Parameter, wie Crewruhezeiten, aufweisen.

4. Verfahren (300) gemäß Anspruch 3, wobei das Modell (170) ausgelegt ist, um in einem Ausnahmezustand Abweichungen von dem sicherheitsrelevanten Parameter Crewruhezeiten zuzulassen, um den Betrieb des Schiffes (110) aufrechtzuerhalten.

5. Verfahren (300) gemäß einem der Ansprüche 1 bis 4, wobei zumindest einer der betriebsrelevanten Parameter basierend auf einer Abweichung des aktuellen Schiffsbetriebszustandes (150) von dem definierten Schiffsbetriebszustand des Schiffsreiseplans (140), angepasst wird.

6. Verfahren (300) gemäß einem der Ansprüche 1 bis 5, wobei das Modell (170) berücksichtigt, ob Aufgaben des Aufgabenzeitplans (180) für die Crew (112) zeitlich aufgeteilt und/oder auf mehrere Crewmitglieder aufgeteilt werden können.

7. Verfahren (300) gemäß einem der Ansprüche 1 bis 6, wobei die Berechnung des aktualisierten Schiffsreiseplans (160), basierend auf dem Modell (170), in einer Zeit kürzer als fünf Minuten nach Feststellung der Abweichungen des aktuellen Schiffsbetriebszustandes (150) von dem definierten Schiffsbetriebszustand des Schiffsreiseplans (140) erfolgt.

8. Verfahren (300) gemäß einem der Ansprüche 1 bis 7, wobei der aktuelle Schiffsbetriebszustand (150) aktuelle und/oder zukünftige Arbeitszeiten und/oder Aufgaben der Crew (112) aufweist.

9. Verfahren (300) gemäß einem der Ansprüche 1 bis 8, wobei der aktuelle Schiffsbetriebszustand (150) zu bestimmten Zeitpunkten oder bei Ereignissen erfasst wird.

10. Verfahren (300) gemäß einem der Ansprüche 1 bis 9, wobei der Schiffsreiseplan (140) und/oder der aktualisierte Schiffsreiseplan (160) abhängig von einer Schiffsroute ist.

11. Verfahren (300) zum Betrieb eines Schiffes (110) mit folgenden Schritten:
Übertragen (310) eines Schiffsreiseplans (140) von einer Landstation (130) an eine Verarbeitungseinrichtung (120) des Schiffes (110), wobei der Schiffsreiseplan (140) für einen oder mehrere Abschnitte (Z, Z₀ bis Zₖ) einer Reise des Schiffes (110) einen oder mehrere definierte Schiffsbetriebszustände (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) aufweist;
während der Reise, Erfassen (320) eines aktuellen Schiffsbetriebszustandes (150) des Schiffes (110), wobei der aktuelle Schiffsbetriebszustand (150) zeitlich einem der definierten Schiffsbetriebszuständen des Schiffsreiseplans (140) zugeordnet ist und wobei der aktuelle Schiffsbetriebszustand (150) mittels einer Schnittstelle der Verarbeitungseinrichtung (120) zu Maschinensensoren und
zu einer elektronischen Seekarte (190), und/oder
zu Arbeitszeitterminals der Crew (112) erfasst wird; und
wobei die ein oder mehreren definierten Schiffsbetriebszustände (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) und der aktuelle Schiffsbetriebszustand (150) Zustände von Maschinen, und
aktuelle und/oder zukünftige Positionen des Schiffes (110) und/oder
externe Einflüsse aufweisen;
Abgleichen (330) des aktuellen Schiffsbetriebszustandes (150) mit dem zeitlich zugeordneten definierten Schiffsbetriebszustand des Schiffsreiseplans (140), um ansprechend auf Abweichungen des aktuellen Schiffsbetriebszustandes (150) von dem definierten Schiffsbetriebszustand einen aktualisierten Schiffsreiseplan (160) zu berechnen (340),
Berechnen von Zeitintervallen für Wartungsarbeiten von Maschinen des Schiffes (110),
automatisches Regeln des Betriebs des Schiffes (110) mittels des aktualisierten Schiffsreiseplans (160),
wobei der Schiffsreiseplan (140) und der aktualisierte Schiffsreiseplan (160) einen Aufgabenzeitplan (180) für eine Crew (112) des Schiffes (110) für die Reise aufweist, wobei der Aufgabenzeitplan die Zeitintervalle für die Wartungsarbeiten der Maschinen des Schiffes anzeigt.

12. Computerprogramm mit einem Programmcode zur Durchführung des Verfahrens (300) nach einem der Ansprüche 1 bis 11, wenn das Programm auf einem Computer abläuft.

13. Vorrichtung zum Betrieb eines Schiffes (110) mit folgenden Merkmalen:
einer Verarbeitungseinrichtung (120) des Schiffes (110), die konfiguriert ist,
um einen Schiffsreiseplan (140) zu erhalten, wobei der Schiffsreiseplan (140) für einen oder mehrere Abschnitte (Z, Z₀ bis Zₖ) einer Reise des Schiffes (110) einen oder mehrere definierte Schiffsbetriebszustände (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) aufweist;
um während der Reise einen aktuellen Schiffsbetriebszustand (150) des Schiffes (110) zu erfassen, wobei der aktuelle Schiffsbetriebszustand (150) zeitlich einem der definierten Schiffsbetriebszuständen des Schiffsreiseplans (140) zugeordnet ist und
um mittels einer Schnittstelle zu Maschinensensoren und
zu einer elektronischen Seekarte (190), und/oder
zu Arbeitszeitterminals der Crew (112)
den aktuellen Schiffsbetriebszustand (150) zu erfassen; und
wobei die ein oder mehreren definierten Schiffsbetriebszustände (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) und der aktuelle Schiffsbetriebszustand (150) Zustände von Maschinen, und
aktuelle und/oder zukünftige Positionen des Schiffes (110) und/oder
externe Einflüsse aufweisen;
um den aktuellen Schiffsbetriebszustand (150) mit dem zeitlich zugeordneten definierten Schiffsbetriebszustand des Schiffsreiseplans (140) abzugleichen, um ansprechend auf Abweichungen des aktuellen Schiffsbetriebszustandes (150) von dem definierten Schiffsbetriebszustand einen aktualisierten Schiffsreiseplan (160) zu berechnen, und
um Zeitintervallen für Wartungsarbeiten von Maschinen des Schiffes (110) zu berechnen,
um automatisch den Betrieb des Schiffes (110) mittels des aktualisierten Schiffsreiseplans (160) zu regeln,
wobei der Schiffsreiseplan (140) und/oder der aktualisierte Schiffsreiseplan (160) einen Aufgabenzeitplan (180) für eine Crew (112) des Schiffes (110) für die Reise aufweist, wobei der Aufgabenzeitplan die Zeitintervalle für die Wartungsarbeiten der Maschinen des Schiffes anzeigt.

14. Vorrichtung zum Betrieb eines Schiffes (110) gemäß Anspruch 13, wobei der Schiffsreiseplan (14) von einer Landstation (130) erhalten wird.

15. Schiff, mit einer Vorrichtung gemäß Anspruch 13 oder Anspruch 14.

## Claims

1. Method (300) for operating a ship (110), comprising:
obtaining a ship itinerary (140) by means of a processing means (12) of the ship (110), the ship itinerary (140) comprising one or more defined ship operating conditions (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) for one or more sections (Z, Z₀ to Zₖ) of a journey of the ship (110);
during the journey, detecting (320) a current ship operating condition (150) of the ship (110), the current ship operating condition (150) being temporally associated with one of the defined ship operating conditions of the ship itinerary (140), and wherein the current ship operating condition (150) is detected by means of an interface of the processing means (120) with machine sensors and
with an electronic sea map (190), and/or
with working-hour terminals of the crew (112); and
wherein the one or more defined ship operating conditions (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) and the current ship operating condition (150) comprise states of machines, current and/or future positions of the ship (110), and/or external influences; and
comparing (330) the current ship operating condition (150) to the temporally associated, defined ship operating condition of the ship itinerary (140) so as to calculate (340) an updated ship itinerary (160) in response to deviations of the current ship operating condition (150) from the defined ship operating condition,
calculating time intervals for maintenance work of machines of the ship (110);
automatically controlling the operation of the ship (110) by means of the updated ship itinerary (160),
wherein the ship itinerary (140) and/or the updated ship itinerary (160) comprises a task schedule (180) for a crew (112) of the ship (110) for the journey, wherein the task schedule indicates the time intervals for the maintenance work of the machines of the ship.

2. Method (300) as claimed in claim 1, the method (300) comprising transmitting (310) a ship itinerary (140) from a land station (130) to a processing means (120) of the ship (110).

3. Method (300) as claimed in claim 1 or in claim 2, wherein the operation-relevant parameters of the model (170) comprise maintenance times, seafaring times, port lay times and/or safety-relevant parameters such as crew resting periods.

4. Method (300) as claimed in claim 3, wherein the model (170) is configured to allow, in an exceptional state, deviations from the safety-relevant parameter "crew resting periods" so as to maintain operation of the ship (110).

5. Method (300) as claimed in any of claims 1 to 4, wherein at least one of the operation-relevant parameters is adapted on the basis of a deviation of the current ship operating condition (150) from the defined ship operating condition of the ship itinerary (140).

6. Method (300) as claimed in any of claims 1 to 5, wherein the model (170) takes into account whether or not tasks of the task schedule (180) for the crew (112) may be temporally split up and/or be split up among several crew members.

7. Method (300) as claimed in any of claims 1 to 6, wherein calculation of the updated ship itinerary (160) on the basis of the model (170) is effected within less than five minutes upon ascertainment of the deviations of the current ship operating condition (150) from the defined ship operating condition of the ship itinerary (140).

8. Method (300) as claimed in any of claims 1 to 7, wherein the current ship operating condition (150) comprises current and/or future working hours and/or tasks of the crew (112).

9. Method (300) as claimed in any of claims 1 to 8, wherein the current ship operating condition (150) is detected at specific points in time or upon events.

10. Method (300) as claimed in any of claims 1 to 9, wherein the ship itinerary (140) and/or the updated ship itinerary (160) depends on a ship route.

11. Method (300) for operating a ship (110), comprising:
transmitting (310) a ship itinerary (140) from a land station (130) to a processing means (120) of the ship (110), the ship itinerary (140) comprising one or more defined ship operating conditions (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) for one or more sections (Z, Z₀ to Zₖ) of a journey of the ship (110);
during the journey, detecting (320) a current ship operating condition (150) of the ship (110), the current ship operating condition (150) being temporally associated with one of the defined ship operating conditions of the ship itinerary (140), and wherein the current ship operating condition (150) is detected by means of an interface of the processing means (120) with machine sensors and
with an electronic sea map (190), and/or
with working-hour terminals of the crew (112); and
wherein the one or more defined ship operating conditions (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) and the current ship operating condition (150) comprise states of machines, current and/or future positions of the ship (110), and/or external influences; and
comparing (330) the current ship operating condition (150) to the temporally associated, defined ship operating condition of the ship itinerary (140) so as to calculate (340) an updated ship itinerary (160) in response to deviations of the current ship operating condition (150) from the defined ship operating condition,
calculating time intervals for maintenance work of machines of the ship (110);
automatically controlling the operation of the ship (110) by means of the updated ship itinerary (160),
wherein the ship itinerary (140) and the updated ship itinerary (160) comprise a task schedule (180) for a crew (112) of the ship (110) for the journey, wherein the task schedule indicates the time intervals for the maintenance work of the machines of the ship.

12. Computer program comprising a program code for performing the method (300) as claimed in any of claims 1 to 11, when the program runs on a computer.

13. Device for operating a ship (110), comprising:
a processing means (120) of the ship (110) that is configured
to obtain a ship itinerary (140), the ship itinerary (140) comprising one or more defined ship operating conditions (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) for one or more sections (Z, Z₀ to Zₖ) of a journey of the ship (110);
to detect, during the journey, a current ship operating condition (150) of the ship (110), the current ship operating condition (150) being temporally associated with one of the defined ship operating conditions of the ship itinerary (140); and
to detect the current ship operating condition (150) by means of an interface with machine sensors, and
with an electronic sea map (190), and/or
with working-hour terminals of the crew (112);
wherein the one or more defined ship operating conditions (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) and the current ship operating condition (150) comprise states of machines, current and/or future positions of the ship (110), and/or external influences; and
to compare the current ship operating condition (150) to the temporally associated, defined ship operating condition of the ship itinerary (140) so as to calculate an updated ship itinerary (160) in response to deviations of the current ship operating condition (150) from the defined ship operating condition,
to calculate time intervals for maintenance work of machines of the ship (110);
to automatically control the operation of the ship (110) by means of the updated ship itinerary (160),
wherein the ship itinerary (140) and/or the updated ship itinerary (160) comprises a task schedule (180) for a crew (112) of the ship (110) for the journey, wherein the task schedule indicates the time intervals for the maintenance work of the machines of the ship.

14. Device for operating a ship (110) according to claim 13, wherein the ship itinerary (14) is obtained from a land station (130).

15. Ship comprising a device as claimed in claim 13 or claim 14.

## Revendications

1. Procédé (300) destiné à faire fonctionner un navire (110) avec les étapes suivantes :
recevoir un plan de voyage de navire (140) à l'aide d'un dispositif de traitement (120) du navire (110), le plan de voyage de navire (140) présentant, pour une ou plusieurs sections (Z, Z₀ à Zₖ) d'un voyage du navire (110), un ou plusieurs états de fonctionnement de navire définis (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) ;
pendant le voyage, détecter (320) un état de fonctionnement de navire actuel (150) du navire (110), l'état de fonctionnement de navire actuel (150) étant associé temporellement à un des états de fonctionnements de navire définis du plan de voyage de navire (140) et l'état de fonctionnement de navire actuel (150) étant détecté à l'aide d'une interface du dispositif de traitement (120) par rapport à des capteurs de machine et
par rapport à une carte nautique électronique (190), et/ou
par rapport à un terminal de temps de travail de l'équipage (112) ;
et
dans lequel l'un ou plusieurs états de fonctionnement définis de navire (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) et l'état de fonctionnement de navire actuel (150) présentent des états de machines, et
des positions actuelles et/ou futures du navire (110) et/ou
des influences externes ;
comparer (330) l'état de fonctionnement de navire actuel (150) avec l'état de fonctionnement de navire du plan de voyage de navire (140) qui est défini et associé temporellement, afin de calculer (340) un plan de voyage de navire actualisé (160) en réponse à des écarts de l'état de fonctionnement de navire actuel (150) par rapport à l'état de fonctionnement de navire défini,
calculer des intervalles de temps pour des travaux de maintenance sur les machines du navire (110),
régler automatiquement le fonctionnement du navire (110) à l'aide du plan de voyage de navire actualisé (160),
dans lequel le plan de voyage de navire (140) et/ou le plan de voyage de navire actualisé (160) présente un calendrier de tâches (180) pour un équipage (112) du navire (110) pour le voyage, le calendrier de tâches indiquant les intervalles de temps pour les travaux de maintenance des machines du navire.

2. Procédé (300) selon la revendication 1, dans lequel le procédé (300) présente une transmission (310) d'un plan de voyage de navire (140) depuis une station terrestre (130) vers un dispositif de traitement (120) du navire (110).

3. Procédé (300) selon la revendication 1 ou la revendication 2, dans lequel les paramètres de fonctionnement du modèle (170) présentent des temps de maintenance, des temps de voyage en mer, des temps d'escale au port et/ou des paramètres de sécurité, tels que des temps de repos de l'équipage.

4. Procédé (300) selon la revendication 3, dans lequel le modèle (170) est conçu pour autoriser, dans un état d'urgence, des écarts par rapport au paramètre de sécurité des temps de repos de l'équipage, afin de maintenir le fonctionnement du navire (110).

5. Procédé (300) selon l'une des revendications 1 à 4, dans lequel au moins un des paramètres de fonctionnement est adapté sur la base d'un écart de l'état de fonctionnement de navire actuel (150) par rapport à l'état de fonctionnement de navire défini du plan de voyage de navire (140).

6. Procédé (300) selon l'une des revendications 1 à 5, dans lequel le modèle (170) prend en compte si des tâches du calendrier de tâches (180) pour l'équipage (112) peuvent être réparties temporellement et/ou réparties sur plusieurs membres d'équipage

7. Procédé (300) selon l'une des revendications 1 à 6, dans lequel le calcul du plan de voyage de navire actualisé (160), sur la base du modèle (170), se fait dans un temps inférieur à cinq minutes après la constatation des écarts de l'état de fonctionnement de navire actuel (150) par rapport à l'état de fonctionnement de navire défini du plan de voyage de navire (140).

8. Procédé (300) selon l'une des revendications 1 à 7, dans lequel l'état de fonctionnement de navire actuel (150) présente des temps de travail et/ou des tâches de l'équipage (112) actuel (le)s et/ou futur (e)s.

9. Procédé (300) selon l'une des revendications 1 à 8, dans lequel l'état de fonctionnement de navire actuel (150) est détecté à certains moments ou en cas d'événements spécifiques.

10. Procédé (300) selon l'une des revendications 1 à 9, dans lequel le plan de voyage de navire (140) et/ou le plan de voyage de navire actualisé (160) dépend d'un itinéraire de navire.

11. Procédé (300) destiné à faire fonctionner un navire (110) avec les étapes suivantes :
transmettre (310) un plan de voyage de navire (140) depuis une station terrestre (130) vers un dispositif de traitement (120) du navire (110), le plan de voyage de navire (140) présentant, pour une ou plusieurs sections (Z, Z₀ à Zₖ) d'un voyage du navire (110), un ou plusieurs états de fonctionnement de navire définis (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) ;
pendant le voyage, détecter (320) un état de fonctionnement de navire actuel (150) du navire (110), l'état de fonctionnement de navire actuel (150) étant associé temporellement à un des états de fonctionnement de navire définis du plan de voyage de navire (140) et l'état de fonctionnement de navire actuel (150) étant détecté à l'aide d'une interface du dispositif de traitement (120) par rapport à des capteurs de machine et
par rapport à une carte nautique électronique (190), et/ou
par rapport à un terminal de temps de travail de l'équipage (112) ;
et
dans lequel l'un ou plusieurs états de fonctionnement de navire définis (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) et l'état de fonctionnement de navire actuel (150) présentent des états de machines, et,
des positions actuelles et/ou futures du navire (110) et/ou
des influences externes ;
comparer (330) l'état de fonctionnement de navire actuel (150) avec l'état de fonctionnement de navire défini du plan de voyage de navire (140) qui est défini et associé temporellement, afin de calculer (340) un plan de voyage de navire actualisé (160) en réponse à des écarts de l'état de fonctionnement de navire actuel (150) par rapport à l'état de fonctionnement de navire défini,
calculer des intervalles de temps pour des travaux de maintenance sur les machines du navire (110),
régler automatiquement le fonctionnement du navire (110) à l'aide du plan de voyage de navire actualisé (160),
dans lequel le plan de voyage de navire (140) et/ou le plan de voyage de navire actualisé (160) présente un calendrier de tâches (180) pour un équipage (112) du navire (110) pour le voyage, le calendrier de tâches indiquant les intervalles de temps pour les travaux de maintenance des machines du navire.

12. Programme informatique avec un code de programme pour mettre en œuvre le procédé (300) selon l'une des revendications 1 à 13, lorsque le programme est exécuté sur un ordinateur.

13. Dispositif destiné à faire fonctionner un navire (110) avec les caractéristiques suivantes :
un dispositif de traitement (120) du navire (110), qui est configuré pour
recevoir un plan de voyage de navire (140), le plan de voyage de navire (140) présentant, pour une ou plusieurs sections (Z, Z₀ à Zₖ) d'un voyage du navire (110), un ou plusieurs états de fonctionnement de navire définis (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) ;
détecter, pendant le voyage, un état de fonctionnement de navire actuel (150) du navire (110), l'état de fonctionnement de navire actuel (150) étant associé temporellement à un des états de fonctionnement de navire définis du plan de voyage de navire (140) et,
à l'aide d'une interface par rapport à des capteurs de machine et
par rapport à une carte nautique électronique (190), et/ou
par rapport à un terminal de temps de travail de l'équipage (112),
détecter l'état de fonctionnement de navire actuel (150) ; et
dans lequel l'un ou plusieurs états de fonctionnement définis de navire (Z', Z'₁, Z'₂, Z'ₙ₋₁, Z'ₙ, Z'_{n+1,1}, Z'_{n+1,2}, Z'_{n+2,1}, Z'_{n+2,2}, Z'_{n+2,3}, Z'ₙ₊₃) et l'état de fonctionnement de navire actuel (150) présentent des états de machines, et
des positions actuelles et/ou futures du navire (110) et/ou
des influences externes ;
comparer l'état de fonctionnement de navire actuel (150) avec le l'état de fonctionnement de navire du plan de voyage de navire (140) qui est défini et associé temporellement, afin de calculer un plan de voyage de navire actualisé (160) en réponse à des écarts de l'état de fonctionnement de navire actuel (150) par rapport à l'état de fonctionnement de navire défini, et
calculer des intervalles de temps pour des travaux de maintenance sur les machines du navire (110),
régler automatiquement le fonctionnement du navire (110) à l'aide du plan de voyage de navire actualisé (160),
dans lequel le plan de voyage de navire (140) et/ou le plan de voyage de navire actualisé (160) présente un calendrier de tâches (180) pour un équipage (112) du navire (110) pour le voyage, le calendrier de tâches indiquant les intervalles de temps pour les travaux de maintenance des machines du navire.

14. Dispositif de fonctionnement d'un navire (110) selon la revendication 13, dans lequel le plan de voyage de navire (14) est reçu depuis une station terrestre (130).

15. Navire, avec un dispositif selon la revendication 13 ou la revendication 14.
